(19)

**Europäisches Patentamt**
**European Patent Office**
**Office européen des brevets**

(11) **EP 4 696 904 A1**

(12) **EUROPEAN PATENT APPLICATION**
published in accordance with Art. 153(4) EPC

(43) Date of publication:
**18.02.2026 Bulletin 2026/08**

(21) Application number: **24788699.7**

(22) Date of filing: **08.04.2024**

(51) International Patent Classification (IPC):
**F16H 1/16** (2006.01)    **F16H 55/24** (2006.01)

(52) Cooperative Patent Classification (CPC):
**F16H 1/16; F16H 55/24**

(86) International application number:
**PCT/JP2024/014287**

(87) International publication number:
**WO 2024/214675 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2023 JP 2023063149**

(71) Applicant: **NSK Steering & Control, Inc.
Tokyo, 141-0032 (JP)**

(72) Inventor: **ISHII, Takayuki
Maebashi-shi, Gunma 371-8527 (JP)**

(74) Representative: **Müller-Boré & Partner
Patentanwälte PartG mbB
Friedenheimer Brücke 21
80639 München (DE)**

(54) **WORM REDUCER**

(57)    [Problem]
To provide a worm reducer capable of effectively suppressing an impact sound generated when an engaging reaction force applied to a worm decreases, causing worm teeth and wheel teeth to collide with each other.
[Solution]
When viewed from a third direction, which is an axial direction of a worm accommodating portion 8, an angle formed between a direction in which an engaging reaction force FI increases, causing a tip end portion of a worm 4 to displace away from a worm wheel 3, and a direction in which an engaging reaction force F1 decreases, causing the tip end portion of the worm 4 to displace back to the side of the worm wheel 3, is within a range of ±10°.

FIG. 5

**Description**

**TECHNICAL FIELD**

The present disclosure relates to a worm reducer that can be incorporated into an electric power steering apparatus or the like.

BACKGROUND ART

In the field of steering apparatuses, electric power steering apparatuses that use an electric motor as an auxiliary power source to reduce a force required for a driver to operate a steering wheel have become widespread.

The electric power steering apparatus includes a worm reducer for increasing torque of an electric motor. FIGS. 3 to 25 illustrate a known worm reducer 100 as described in JP 2020-128803 A. The worm reducer 100 includes a housing 101, a worm wheel 102, and a worm 103.

The housing 101 has: a worm wheel accommodating portion 104; and a worm accommodating portion 105 having a central axis that is at a skewed position relative to a central axis of the worm wheel accommodating portion 104, and an intermediate portion in an axial direction that opens into the worm wheel accommodating portion 104. The worm wheel 102 has wheel teeth 106 on an outer circumferential surface thereof, and is rotatably supported inside the worm wheel accommodating portion 104. The worm 103 has worm teeth 107 on an outer circumferential surface thereof that engage with the wheel teeth 106, and is rotatably supported inside the worm accommodating portion 105.

The torque of the electric motor 108 is increased by being transmitted to the worm wheel 102 through the worm 103, and is then applied as auxiliary power to steering force transmission members such as a steering shaft, or a pinion shaft or rack shaft of a steering gear unit. This reduces the force required by the driver to operate the steering wheel.

Generally, in a worm reducer, unavoidable backlash exists at an engaging portion between the wheel teeth and the worm teeth due to dimensional errors and assembly errors of components that make up the worm reduction gear. Due to a presence of backlash, an unpleasant teeth rattling noise may occur at the engaging portion when changing the direction of rotation of the steering wheel.

Therefore, in the conventional structure described in JP 2020-128803 A, the following structure is adopted in order to suppress the generation of teeth rattling noise at the engaging portion between the wheel teeth 106 and the worm teeth 107.

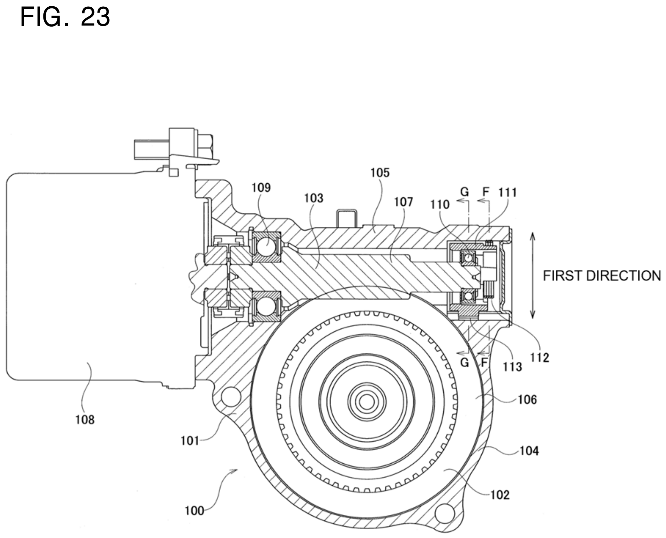

A base end portion (the left end portion in FIG. 23) of the worm 103 is supported using a bearing 109 in the worm accommodating portion 105 so as to be capable of rotation and pivotal displacement. The tip end portion (the right end portion in FIG. 23) of the worm 103 is supported using a bearing 110 in the worm accommodating portion 105 so as to be capable of rotation and radial displacement. For this purpose, a cylindrical holder 111 is externally fitted onto the bearing 110 that is externally fitted onto the tip end portion of the worm 103, and a gap is provided over the entire circumference between the outer circumferential surface of the holder 111 and the inner circumferential surface of the worm accommodating portion 105.

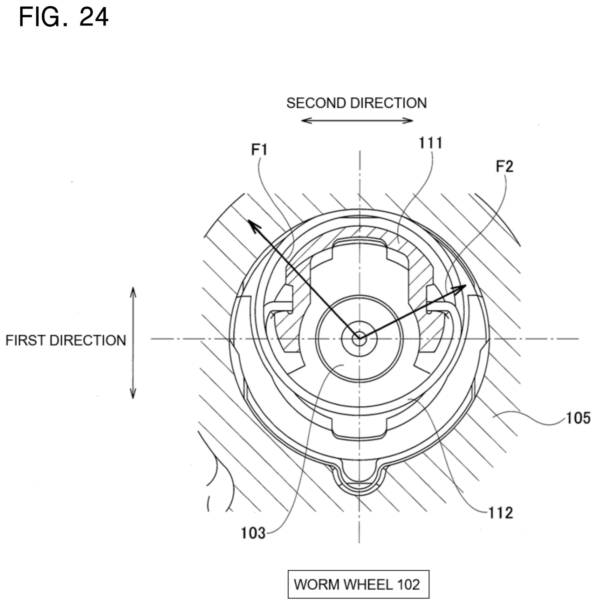

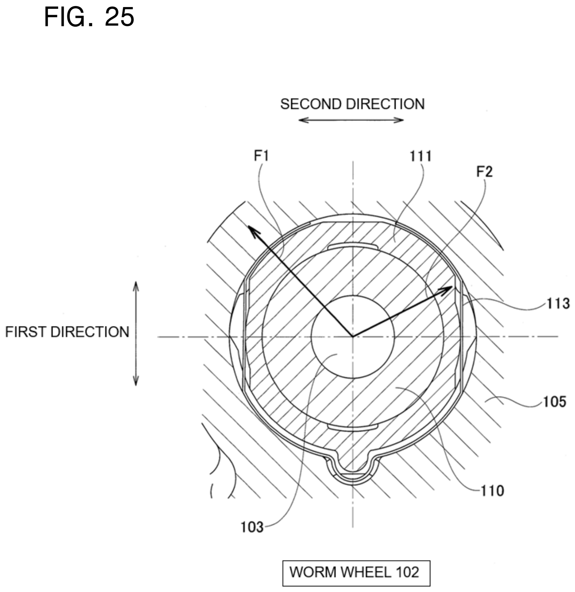

In a first direction perpendicular to both the axial direction of the worm wheel accommodating portion 104 and the axial direction of the worm accommodating portion 105, the tip end portion of the worm 103 is biased toward the worm wheel 102 side (the lower side in FIGS. 23 to 25).

For this purpose, a first spring 112 formed of a torsion coil spring is provided between the holder 111 and the worm accommodating portion 105. The first spring 112 is elastically deformed, and an elastic restoring force of the first spring 112 biases the tip end portion of the worm 103 toward the worm wheel 102 side in the first direction. Thus, backlash at the engaging portion between the wheel teeth 106 and the worm teeth 107 is suppressed, thereby suppressing the generation of teeth rattling noise.

In the known structure described in JP 2020-128803 A, in order to enable the tip end portion of the worm 103 to move toward and away from the worm wheel 102, the cylindrical holder 111 is externally fitted onto the bearing 110 that is externally fitted onto the tip end portion of the worm 103, and a gap is provided around the entire circumference between the outer circumferential surface of the holder 111 and the inner circumferential surface of the worm accommodating portion 105. Therefore, due to the presence of the gap, the tip end portion of the worm 103 can also move in a second direction perpendicular to both the first direction, which is the biasing direction of the first spring 112, and the axial direction of the worm accommodating portion 105.

On the other hand, when torque is transmitted between the worm 103 and the worm wheel 102, an engaging reaction force F1 or F2 is applied to the worm 103 from the engaging portion between the worm teeth 107 and the wheel teeth 106. That is, when the worm 103 is rotationally driven in a predetermined direction, the engaging reaction force F1 is applied, and when the worm 103 is rotationally driven in a direction opposite to the predetermined direction, the engaging reaction force F2 is applied. The engaging reaction forces F1, F2 each include a first directional component and a second directional component. The direction of the first directional component is opposite to the direction of the biasing force of the first spring 112. The direction of the second directional component is reversed depending on the rotation direction of the worm 103.

In addition, in the worm reducer 100 incorporated in the steering apparatus, when tires of an automobile run over a curb or when an automobile travels on a rough road, a large torque may be reversely input from the tires to the worm wheel 102. At this time as well, an engaging reaction force F1 or F2 including a second directional component is applied to the worm 103 from the engaging portion between the worm teeth 107 and the wheel teeth 106.

Therefore, when the tip end portion of the worm 103 is allowed to move in the second direction without resistance due to the existence of the gap, the second directional component of the engaging reaction force F1 or F2 acting on the worm 103 will cause collisions between components in the second direction, making it more likely that unpleasant hammering sounds, rattles, and other abnormal noises will occur.

In consideration of these circumstances, the known structure described in JP 2020-128803 A includes a second spring 113 made of a leaf spring that elastically supports the tip end portion of the worm 103 in the second direction. The second spring 113 is arranged between the outer circumferential surface of the holder 111 and the inner circumferential surface of the worm accommodating portion 105. The second spring 113 suppresses momentum of the tip end portion of the worm 103 when the tip end portion moves in the second direction, thereby suppressing the generation of abnormal noise.

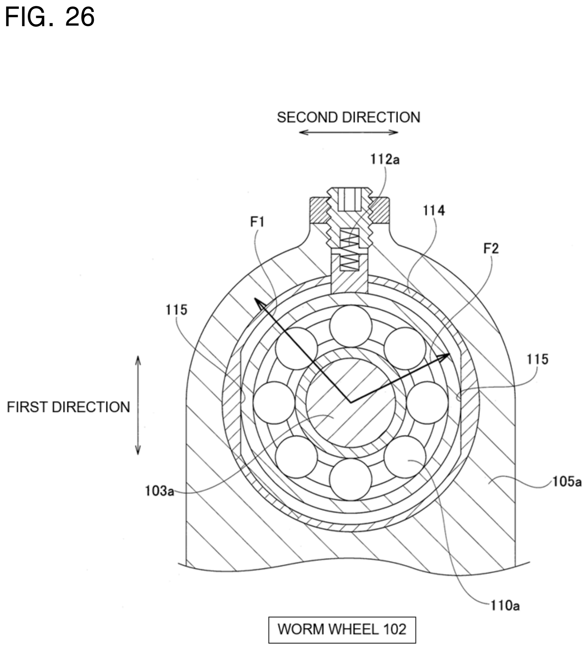

On the other hand, JP 2002-067992 A describes a structure in which, as shown in FIG. 26, the gap in the second direction that exists between the outer circumferential surface of a bearing 110a externally fitted onto the tip end portion of the worm 103a and the inner circumferential surface of the worm accommodating portion 105a is eliminated, thereby enabling the tip end portion of the worm 103a to move only in the first direction, and a first spring 112a consisting of a compression coil spring biases the tip end portion of the worm 103a toward the worm wheel (the lower side of FIG. 26) in the first direction.

In the known structure described in JP 2002-067992 A, in order to eliminate the gap in the second direction, a pair of guide portions 115 are provided on an inner circumferential surface of a cylindrical guide member 114 internally fitted and fixed to the worm accommodating portion 105a at a position that sandwiches the outer circumferential surface of the bearing 110a externally fitted onto the tip end portion of the worm 103a from both sides in the second direction, and the guide portions 115 each extend in the first direction and each contact the outer circumferential surface of the bearing 110a. The pair of guide portions 115 allows the bearing 110a and the tip end portion of the worm 103a to move only in the first direction.

With the known structure described in JP 2002-067992 A, regardless of the second directional component of the engaging reaction force F1 or F2 acting on the worm 103a, the pair of guide portions 115 can prevent the tip end portion of the worm 103a from moving in the second direction, thereby preventing collision between components in the second direction.

**CITATION LIST**

**PATENT LITERATURE**

Patent Literature 1: JP 2020-128803 A
Patent Literature 2: JP 2002-067992 A

**SUMMARY OF INVENTION**

**TECHNICAL PROBLEM**

The conventional structures described in JP 2020-128803 A and JP 2002-067992 A have room for improvement in the following respects.

The engaging reaction forces F1, F2 acting on the worm 103, 103a from the engaging portion between the worm teeth 107 and the wheel teeth 106 include a first directional component and a second directional component. Therefore, in the conventional structure described in JP 2020-128803 A, when the engaging reaction forces F1, F2 are applied to the worm 103, the tip end portion of the worm 103 displaces in the first and second directions against the elastic forces of the first spring 112 and the second spring 113. In addition, in the conventional structure described in JP 2002-067992 A, when the engaging reaction forces F1, F2 are applied to the worm 103a, the tip end portion of the worm 103a displaces in the first direction against the elastic force of the first spring 112a. As the transmission torque decreases from the displaced state of the worm 103, 103a, the engaging reaction forces F1, F2 acting on the worm 103, 103a decrease, and when the tip end portion of the worm 103, 103a returns to the original position due to the elastic force of the springs, the worm teeth 107 collide with the wheel teeth 106.

In particular, a magnitude of the first direction component included in the engaging reaction forces F1, F2 differs between when the worm 103, 103a is rotationally driven in a predetermined direction and when the worm 103, 103a is rotationally driven in a direction opposite to the predetermined direction, and the first directional component included in the engaging reaction force F1 when the worm is rotationally driven in the predetermined direction is larger than the first directional component included in the engaging reaction force F2 when the worm is rotationally driven in the direction opposite to the predetermined direction.

Therefore, when the worm 103, 103a is driven to rotate in a predetermined direction, the amount of displacement in the first direction of the tip end portion of the worm 103, 103a is greater than when the worm 103, 103a is driven to rotate in the direction opposite to the predetermined direction, and the increase in the axial distance between the worm 103, 103a and the worm wheel 102 is greater.

In the known structures described in JP 2020-128803 A and JP 2002-067992 A, when the worm 103, 103a is driven to rotate in a predetermined direction and the tip end portion of the worm 103, 103a returns to the original position, that is, when a center distance between the worm 103, 103a and the worm wheel 102 decreases, the worm teeth 107 and the wheel teeth 106 collide forcefully, which may cause an impact sound.

In addition, when torque is input in reverse from the tires to the worm wheel, the worm 103, 103a is rotated in response to the rotation of the worm wheel 102. In this case, when the worm 103, 103a is rotated in a direction opposite to a predetermined direction, the engaging reaction force applied to the worm 103, 103a becomes F1, and when the worm 103, 103a is rotated in the predetermined direction, the engaging reaction force applied to the worm 103, 103a becomes F2. In any case, in the above-described known structure, when the engaging reaction force F1 acting on the worm 103, 103a decreases, the worm teeth 107 and the wheel teeth 106 may collide with each other forcefully, causing an impact sound.

An object of a technique according to the present disclosure is to provide a worm reducer that can reduce the engaging reaction force applied to the worm and effectively suppress the generation of impact sound when the worm teeth collide with the wheel teeth.

**SOLUTION TO PROBLEM**

As a result of careful consideration of the above points, it was discovered that when viewed from the third direction, which is the axial direction of the worm accommodating portion, the direction in which the engaging reaction force F1 causes the tip end portion of the worm to be displaced away from the worm wheel (the same direction as the direction of the engaging reaction force F1) and the direction in which the engaging reaction force F1 decreases and the tip end portion of the worm is displaced back toward the worm wheel are approximately aligned, the worm teeth and wheel teeth can be caused to collide over a wide area when the tip end portion of the worm returns to the worm wheel, or in other words, unstable collisions can be suppressed and the original engaging state can be restored, thereby suppressing the generation of impact sound. The technique according to the present disclosure was completed based on this finding.

A worm reducer according to one aspect of the present disclosure includes a housing, a worm wheel, a worm, a first spring, and a second spring.

The housing has: a worm wheel accommodating portion; and a worm accommodating portion having a central axis that is at a skewed position relative to a central axis of the worm wheel accommodating portion, and an intermediate portion in an axial direction that opens into the worm wheel accommodating portion.

The worm wheel has wheel teeth on an outer circumferential surface thereof, and is rotatably supported inside the worm wheel accommodating portion.

The worm has worm teeth on an outer peripheral surface thereof that engage with the wheel teeth, and the worm has a base end portion supported inside the worm accommodating portion so as to be rotatable and pivotally displaceable relative to the worm accommodating portion, and a tip end portion supported inside the worm accommodating portion so as to be rotatable and displaceable in a radial direction relative to the worm accommodating portion.

The first spring is arranged around the tip end portion of the worm and elastically biases the tip end portion of the worm toward a side of the worm wheel in a first direction that is perpendicular to both the axial direction of the worm wheel accommodating portion and the axial direction of the worm accommodating portion.

The second spring is arranged around the tip end portion of the worm and elastically supports the tip end portion of the worm in a second direction perpendicular to both the first direction and the axial direction of the worm accommodating portion.

A component in the second direction of an engaging reaction force F1 applied to the worm from an engaging portion between the worm teeth and the wheel teeth when the worm is rotationally driven in a predetermined direction, and a component in the second direction of an engaging reaction force F2 applied to the worm from the engaging portion when the worm is rotationally driven in a direction opposite to the predetermined direction, are opposite in direction to each other, and a component in the first direction of the engaging reaction force F1 is greater than a component in the first direction of the engaging reaction force F2.

Particularly, in the worm reducer according to one aspect of the present disclosure, when viewed from a third direction that is the axial direction of the worm accommodating portion, an angle between a direction in which the engaging reaction force F1 increases and the tip end portion of the worm is displaced away from the worm wheel and a direction in which the engaging reaction force F1 decreases and the tip end portion of the worm is displaced back toward the side of the worm wheel is within a range of $\pm 10°$.

In other words, in the worm reducer according to one aspect of the present disclosure, when viewed from the third direction, an angle between a direction of the engaging reaction force F1 and a direction of a reaction force of a composite spring of the first spring and the second spring when the worm is separated from the worm wheel by the engaging reaction force F1 is within the range of $\pm 10°$.

In the worm reducer according to one aspect of the present disclosure,

the first spring may comprise a leaf spring arranged on a side farther from the worm wheel in the first direction in a portion between an outer circumferential surface of an inner diameter side member that is a support bearing externally fitted onto the tip end portion of the worm or an outer fitting member externally fitted onto the support bearing, and an inner circumferential surface of an outer diameter side member that is the worm accommodating portion or an inner fitting member internally fitted into the worm accommodating portion;

the first spring may have a load point that is a contact portion with the outer circumferential surface of the inner diameter side member, and a fulcrum that is a portion of a contact portion with the inner circumferential surface of the outer diameter side member that is located closest to the load point; and

the first spring may exhibit nonlinear spring characteristics such that a spring constant thereof increases as a position of the fulcrum changes to approach the load point as an amount of deflection thereof in the first direction increases.

In the worm reducer according to one aspect of the present disclosure, the first spring may be arranged to extend in the second direction, with one end portion thereof in the second direction being supported by cantilever support relative to the outer diameter side member, and may have the load point at another end portion thereof in the second direction.

In the worm reducer according to one aspect of the present disclosure, the outer diameter side member may have a plurality of corner portions spaced apart in the second direction as portions that come into contact with the first spring during operation.

In the worm reducer according to one aspect of the present disclosure, the outer diameter side member may include a convex curved surface portion as a portion that comes into contact with the first spring during operation.

In the worm reducer according to one aspect of the present disclosure, the second spring may include a pair of sandwiching leaf springs arranged on both sides of the inner diameter side member in the second direction in a portion between an outer circumferential surface of an inner diameter side member that is a support bearing externally fitted onto the tip end portion of the worm or an outer fitting member externally fitted onto the support bearing, and an inner circumferential surface of an outer diameter side member that is the worm accommodating portion or an inner fitting member internally fitted into the worm accommodating portion; and each of the pair of sandwiching leaf springs may exhibit a nonlinear spring characteristic in which a spring constant thereof increases as an amount of deflection thereof in the second direction increases.

In the worm reducer according to one aspect of the present disclosure, each of the pair of sandwiching leaf springs may be in contact with the inner circumferential surface of the outer diameter side member and the outer circumferential surface of the inner diameter side member, and as the amount of deflection in the second direction increases, a contact position with respect to the outer circumferential surface of the inner diameter side member may change, thereby increasing the spring constant.

The worm reducer according to the present disclosure can be implemented by appropriately combining the above-described aspects within a range that does not cause contradictions.

## ADVANTAGEOUS EFFECTS OF INVENTION

With the worm reducer according to one aspect of the present disclosure, an engaging reaction force applied to the worm can be reduced, and the generation of impact sound when the worm teeth collide with the wheel teeth can be effectively suppressed.

## BRIEF DESCRIPTION OF DRAWINGS

[FIG. 1] FIG. 1 is a diagram illustrating an electric power steering apparatus incorporating a worm reducer of a first example of an embodiment according to the present disclosure.

[FIG. 2] FIG. 2 is a cross-sectional view taken along line A-A in FIG. 1.

[FIG. 3] FIG. 3 is an enlarged view of the upper right portion of FIG. 2.

[FIG. 4] FIG. 4 is an exploded perspective view of the portion illustrated in FIG. 3.

[FIG. 5] FIG. 5 is a view of the part illustrated in FIG. 3 as viewed from the right side with the cover and the retaining ring removed.

[FIG. 6] FIG. 6 is an enlarged view of part B in FIG. 5.

[FIG. 7] FIG. 7 is an enlarged view of part C in FIG. 5.

[FIG. 8] FIG. 8 is a view of a housing in the first example, as viewed from the right side of FIG. 3.

[FIG. 9] FIG. 9 is a perspective view illustrating a support bearing, a first spring, and a second spring in the first example.

[FIG. 10] FIG. 10 is a view illustrating the components illustrated in FIG. 9 in isolation.

[FIG. 11] FIG. 11(a) is a side view of the first spring in the first example, FIG. 11(b) is a view as viewed from the top of FIG. 11(a), FIG. 11(c) is a view as viewed from the bottom of FIG. 11(a), FIG. 11(d) is a view as viewed from the left side of FIG. 11(a), and FIG. 11(e) is a view as viewed from the right side of FIG. 11(a).

[FIG. 12] FIG 12(a) is a side view of the second spring in the first example, FIG. 12(b) is a view as viewed from the top of FIG. 12(a), FIG 12(c) is a view as viewed from the bottom of FIG. 12(a), FIG 12(d) is a view as viewed from the left side of FIG. 12(a), and FIG. 12(e) is a view as viewed from the right side of FIG. 12(a).

[FIG. 13] FIG. 13(a) to 13(d) are diagrams that schematically illustrate how an amount of deflection of the first spring in the first direction increases in the first example.

[FIG. 14] FIG. 14 is a diagram (conceptual diagram) illustrating spring characteristics of the first spring in the first example.

[FIG. 15] FIGS. 15(a) to 15(c) are diagrams that schematically illustrate how an amount of deflection of the second spring in the second direction increases in the first example.

[FIG. 16] FIG. 16 is a diagram (conceptual diagram) illustrating spring characteristics of the second spring in the first example.

[FIG. 17] FIGS. 17(a) to 17(c) are diagrams that schematically illustrate how the amount of deflection of the second spring in the second direction in the first example does not change with movement in the first direction.

[FIG. 18] FIG. 18 is a diagram for explaining a direction of the engaging reaction force applied to the worm from the engaging portion between the wheel teeth and the worm teeth when the worm is driven to rotate in a predetermined direction. More specifically, FIG. 18(a) is a cross-sectional view taken along an imaginary plane that is perpendicular to the central axis of the worm wheel and includes the central axis of the worm, and FIG. 18(b) is a cross-sectional view taken along D-D of FIG. 18(a).

[FIG. 19] FIG. 19 is a diagram for explaining the direction of the engaging reaction force applied to the worm from the engaging portion between the wheel teeth and the worm teeth when the worm is driven to rotate in a direction opposite to the predetermined direction. More specifically, FIG. 19(a) is a cross-sectional view taken along an imaginary plane that is perpendicular to the central axis of the worm wheel and includes the central axis of the worm, and FIG. 19(b) is a cross-sectional view taken along line E-E of FIG. 19(a).

[FIG. 20] FIG. 20 is a diagram similar to FIG. 18(b), illustrating the engaging reaction force F1 in FIG. 18(b) and the engaging reaction force F2 in FIG. 19(b) superimposed on each other.

[FIG. 21] FIG. 21 is a diagram illustrating a relationship between the tip end portion of the worm, the support bearing, the first spring, and the second spring in the first example, as viewed from the third direction.

[FIG. 22] FIG. 22 is a diagram corresponding to FIG. 13(a) relating to a second example of an embodiment according to the present disclosure.

[FIG. 23] FIG. 23 is a cross-sectional view illustrating an electric power steering apparatus incorporating a first example of a conventional structure of a worm reducer.

[FIG. 24] FIG. 24 is a cross-sectional view taken along the line F-F in FIG. 23.

[FIG. 25] FIG. 25 is a cross-sectional view taken along the line G-G in FIG. 23.

[FIG. 26] FIG. 26 is a diagram corresponding to Fig. 25 illustrating a second example of a conventional structure of a worm reducer.

## DESCRIPTION OF EMBODIMENTS

[First Example]

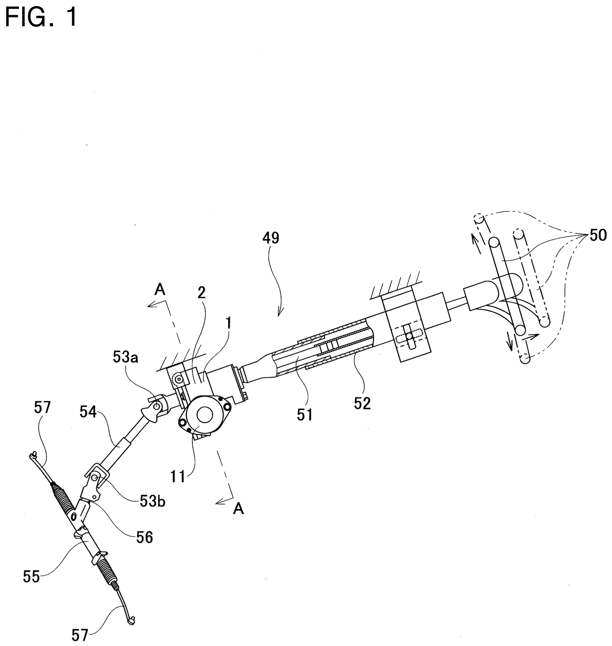

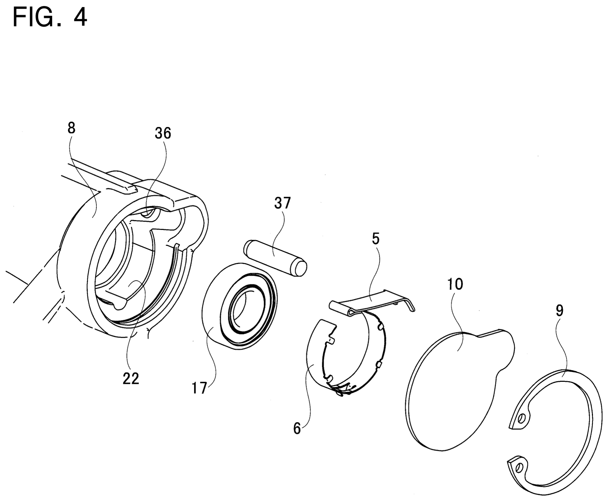

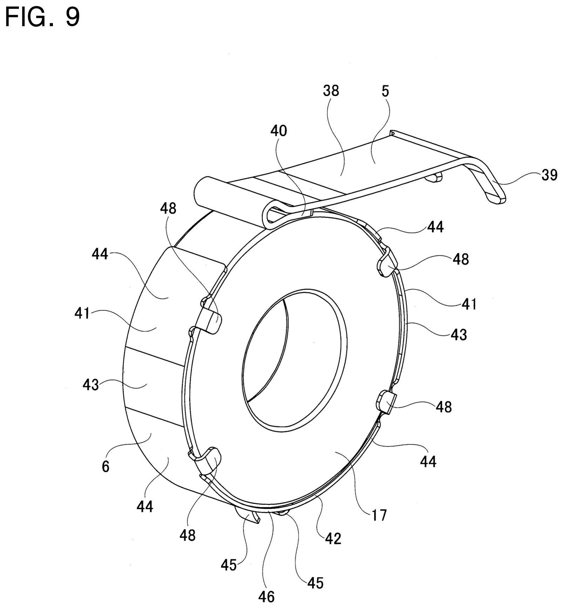

A worm reducer of a first example of an embodiment according to the present disclosure will be described using FIG. 1 to FIG. 21.

(1) Worm Reducer

The worm reducer according to the present disclosure can be applied to worm reducers incorporated into parts of various mechanical devices; however, in the present example, a case will be described in which the structure according to the present disclosure is applied to a worm reducer incorporated into part of an electric power steering apparatus for an automobile.

As illustrated in FIGS. 1 to 5, the worm reducer 1 of the present example includes a housing 2, a worm wheel 3, a worm 4, a first spring 5, and a second spring 6.

The housing 2 includes a worm wheel accommodating portion 7 and a worm accommodating portion 8 having a central axis that is at a skewed position relative to a central axis of the worm wheel accommodating portion 7 and an intermediate portion in an axial direction thereof that opens into the worm wheel accommodating portion 7.

The housing 2 can be made of any material as long as it is possible to ensure a required rigidity. In the present example, the housing 2 is made of an aluminum alloy.

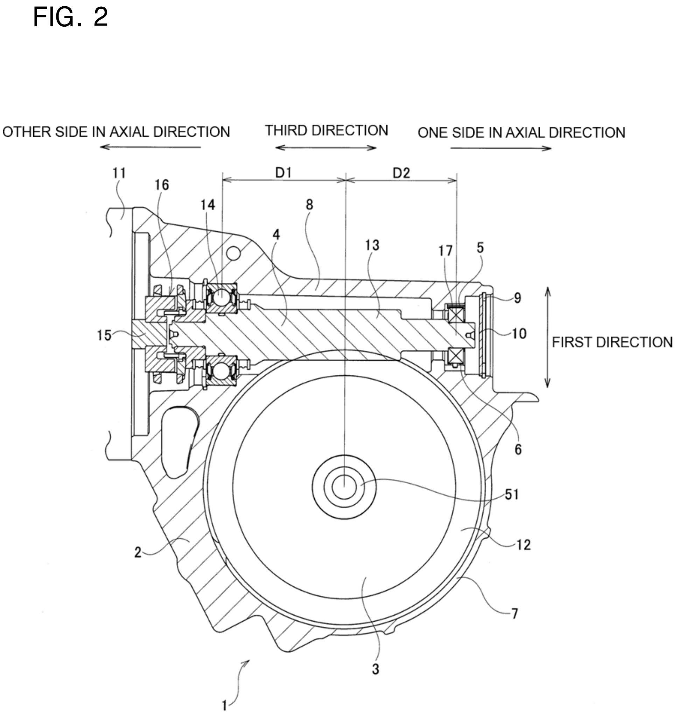

The worm wheel accommodating portion 7 is configured in a cylindrical shape. In FIG. 2, the central axis of the worm wheel accommodating portion 7 extends in a front-rear direction.

The worm accommodating portion 8 is configured in a cylindrical shape and has openings on end portions on both sides in the axial direction. In FIG. 2, the central axis of the worm accommodating portion 8 extends in a left-right direction. An opening on one side in the axial direction of the worm accommodating portion 8 is closed by a cover 10 attached to the opening using a retaining ring 9. The opening on the other side in the axial direction of the worm accommodating portion 8 is closed by an electric motor 11 coupled and fixed to the housing 2.

Note that with respect to the worm accommodating portion 8 and the members accommodated in the worm accommodating portion 8, one side in the axial direction is the right side in FIG. 2, and the other side in the axial direction is the left side in FIG. 2.

The worm wheel 3 has helical gear-shaped wheel teeth 12 on an outer circumferential surface thereof, and is rotatably supported inside the worm wheel accommodating portion 7. In the present example, the worm wheel 3 is externally fitted and fixed to a portion in the axial direction of a rotating shaft that is rotatably supported inside the worm wheel accommodating portion 7 (in this example, a front-side portion of a steering shaft 51 in the front-rear direction of the vehicle).

Any material can be used as the material to form the worm wheel 3 as long as it is possible to ensure the required strength and rigidity. For example, the worm wheel 3 can be made as a whole integrally from an iron-based alloy such as carbon steel for mechanical construction. Alternatively, the worm wheel 3 can be constructed by joining and fixing an outer side element made of synthetic resin having the wheel teeth 12 to an inner side element made of metal that serves as a core material. The synthetic resin of the outer side element is not limited; however, in addition to polyamide 66 (PA66), polyamide 6 (PA6), polyamide 46 (PA46), polyamide 9T (PA9T), polyphenylene sulfide (PPS), polyethylene terephthalate (PET), polyacetal (POM), phenolic resin (PF), or the like may be used. In the present example, the worm wheel 3 is made of polyamide 66 containing 25 wt.% glass fiber (PA66/GF25).

The worm 4 has threaded worm teeth 13 on an outer circumferential surface of an intermediate portion in the axial direction thereof, and the worm wheel 13 engages with the wheel teeth 12 of the worm wheel 3. The helix direction of the worm teeth 13 may be either right-handed or left-handed. In the present example, the helix direction of the worm teeth 13 is right-handed.

A base end portion (the left end portion in FIG. 2) of the worm 4 is supported in the worm accommodating portion 8 so as to be capable of rotation and pivotal displacement. A structure for supporting the base end portion of the worm 4 relative to the worm accommodating portion 8 so as to allow rotation and pivotal displacement is not particularly limited, and various conventionally known structures may be employed.

In the present example, the base end portion of the worm 4 is rotatably supported by a ball bearing 14 in the worm accommodating portion 8. More specifically, an outer ring of the ball bearing 14 is internally fitted into the worm accommodating portion 8 with a gap in a radial direction therebetween, and an inner ring of the ball bearing 14 is externally fitted to the base end portion of the worm 4 with a gap in the radial direction therebetween. As a result, the base end portion of the worm 4 is supported in the worm accommodating portion 8 so as to be capable of rotation and pivotal displacement.

Any material can be used as the material to form the worm 4 as long as it is possible to ensure the required strength and rigidity. For example, the worm 4 can be made of an iron-based alloy such as carbon steel for mechanical construction. In this example, the worm 4 is made of carbon steel for machine construction (S45C).

The base end portion of the worm 4 is connected to a tip end portion of an output shaft 15 of the electric motor 11 so as to be capable of transmitting torque and allowing pivotal displacement. The structure for connecting the base end portion of the worm 4 to the tip end portion of the output shaft 15 of the electric motor 11 so as to be capable of transmitting torque and allowing pivotal displacement is not particularly limited. For example, the base end portion of the worm 4 and the tip end portion of the output shaft 15 can be connected using a coupling 16. Alternatively, a male spline portion provided on one of the base end portion of the worm 4 and the tip end portion of the output shaft 15 can be connected to a female spline portion provided on the other by a spline engagement. In the present example, the base end portion of the worm 4 is connected to the tip end portion of the output shaft 15 of the electric motor 11 by using a coupling 16 so as to be capable of transmitting torque and allowing pivotal displacement.

The tip end portion of the worm 4 is supported by the worm accommodating portion 8 using a support bearing 17 so as to be capable of rotation and displacement in the radial direction. The support bearing 17 is not particularly limited, and can be configured as a rolling bearing such as a ball bearing or a roller bearing, or a sliding bearing.

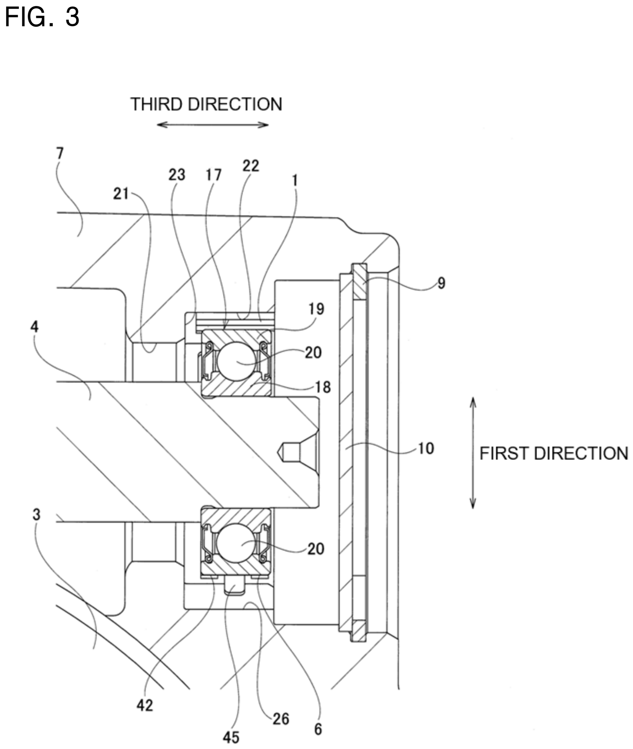

In the present example, the support bearing 17 is formed of a ball bearing. As illustrated in FIG. 3, the support bearing 17 includes an inner ring 18, an outer ring 19, and a plurality of balls 20 arranged between an inner-ring raceway provided on the outer circumferential surface of the inner ring 18 and an outer-ring raceway provided on the inner circumferential surface of the outer ring 19. The inner ring 18 is externally fitted and fixed onto the tip end portion of the worm 4.

In the present example, the inner circumferential surface of the worm accommodating portion 8 has a small-diameter cylindrical surface portion 21 at a portion near an end portion on the one side in the axial direction and having a smaller diameter than a diameter of the outer circumferential surface of the support bearing 17, or in other words, the outer circumferential surface of the outer circumferential surface of the outer ring 19, and has a holding portion 22 at a portion adjacent to the one side in the axial direction of the small-diameter cylindrical surface portion 21, the holding portion 22 having a larger diameter than the diameter of the small-diameter cylindrical surface portion 21. The small-diameter cylindrical surface portion 21 and the holding portion 22 are connected by a stepped surface 23 facing the one side in the axial direction. In the present example, the support bearing 17 is arranged inside the holding portion 22 so as to be able to displace (move) in the radial direction.

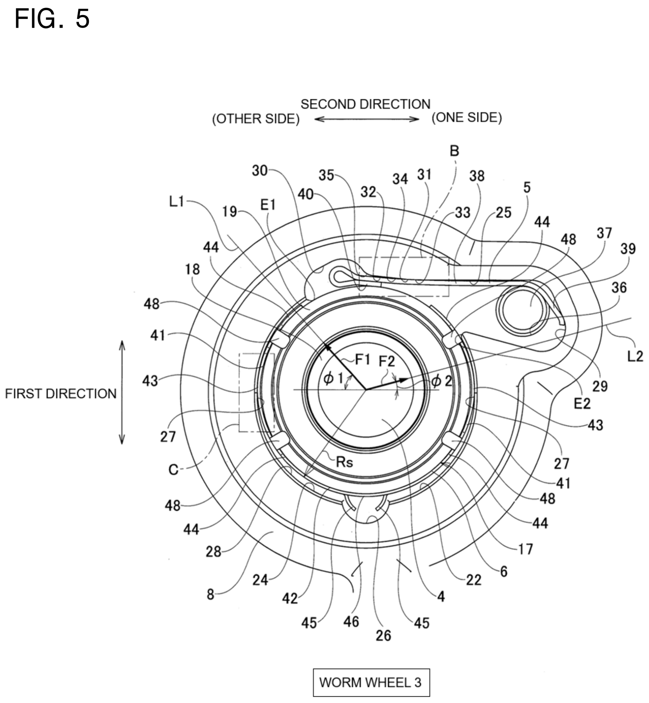

Note that in the following description, a direction perpendicular to both the axial direction of the worm wheel accommodating portion 7 and the axial direction of the worm accommodating portion 8 (the up-down direction in FIGS. 2, 3, and 5) will be referred to as a "first direction", a direction perpendicular to both the first direction and the axial direction of the worm accommodating portion 8 (the front-rear direction in FIGS. 2 and 3, the left-right direction in FIG. 5) will be referred to as a "second direction", and the axial direction of the worm accommodating portion 8 (the left-right direction in FIGS. 2 and 3, the front-rear direction in FIG. 5) will be referred to as a "third direction".

The first spring 5 is arranged around the tip end portion of the worm 4 and elastically biases the tip end portion of the worm 4 toward the worm wheel 3 in the first direction. Thus, backlash between the wheel teeth 12 and the worm teeth 13 is suppressed, thereby suppressing the generation of teeth rattling noise.

The second spring 6 is arranged around the tip end portion of the worm 4 and elastically supports the tip end portion of the worm 4 in the second direction. Thus, the momentum of the tip end portion of the worm 4 is reduced when moving in the second direction, thereby suppressing the generation of abnormal noise.

In the worm reducer 1, when torque is transmitted from the worm 4 to the worm wheel 3, engaging reaction forces F1, F2 are applied to the worm 4 from the engaging portion between the wheel teeth 12 and the worm teeth 13 when viewed from the third direction (see FIG. 5). In the worm reducer 1 of the present example, the helix direction of the worm teeth 13 provided on the worm 4 is right-handed, and thus when the worm 4 is driven to rotate in a predetermined direction (clockwise in FIG. 5), the engaging reaction force F1 is applied to the worm 4, and when the worm 4 is driven to rotate in a direction opposite to the predetermined direction (counterclockwise in FIG. 5), the engaging reaction force F2 is applied to the worm 4.

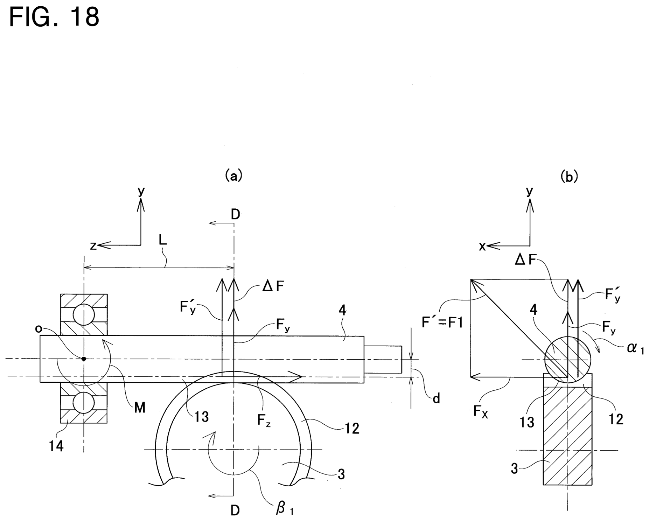

The engaging reaction forces F1, F2 include not only a component in the first direction (first directional component) but also a component in the second direction (second directional component). This aspect will be described with reference to FIGS. 18 to 20.

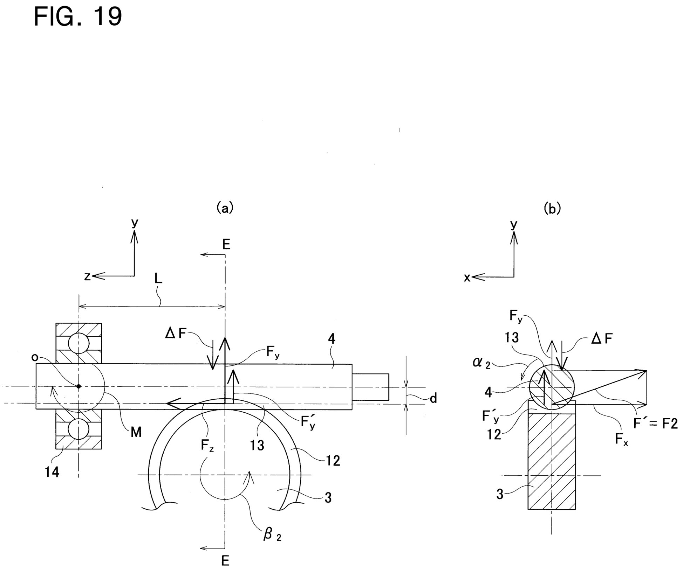

FIGS. 18 and 19 illustrate a state in which the driving force is transmitted from the worm 4 to the worm wheel 3 by rotationally driving the worm 4. In FIGS. 18 and 19, a magnitude of the driving force for rotationally driving the worm 4 is the same, but the rotation directions of the worm 4 are opposite to each other. More specifically, in FIG. 18, the worm 4 is rotating in a predetermined direction (the direction of arrow $\alpha_1$ in FIG. 18(b)), and in FIG. 19, the worm 4 is rotating in a direction opposite to the predetermined direction (the direction of arrow $\alpha_2$ in FIG. 19(b)).

Therefore, in FIG. 18 and FIG. 19, the rotation directions of the worm wheel 3 are opposite to each other. More specifically, in FIG. 18, the worm wheel 3 rotates in a predetermined direction (the direction of arrow $\beta_1$ in FIG. 18(a)), and in FIG. 19, the worm wheel 3 rotates in a direction opposite to the predetermined direction (the direction of arrow $\beta2$ in FIG. 19(a)).

As shown in FIGS. 18 and 19, in a state in which a driving force is being transmitted from the worm 4 to the worm wheel 3, an apparent engaging reaction force having components $F_x$, $F_y$, and $F_z$ in three directions that are perpendicular to each other is applied to the worm 4 from the engaging portion between the wheel teeth 12 and the worm teeth 13. Here, the component $F_x$ is a component in the x-direction, which is the second direction, the component $F_y$ is a component in the y-direction, which is the first direction, and the component $F_z$ is a component in the z-direction, which is the third direction. In FIG. 18 and FIG. 19, the directions of the components $F_y$ are the same; however, the directions of the components $F_x$ and $F_z$ are opposite.

In a case in which the distance in the first direction (y direction) between the center of oscillation o of the worm 4 and the engaging portion is d, a moment M having a magnitude of $d \cdot F_z$ acts on the worm 4. Therefore, in a case in which the distance in the third direction (z direction) between the center of oscillation o and the engaging portion is L, a force $\Delta F$ of magnitude M/L based on the moment M acts on the worm 4 in the first direction (y direction). In FIG. 18 and FIG. 19, the directions of the forces $\Delta F$ are opposite to each other. More specifically, in FIG. 18, the direction of the force $\Delta F$ is upward, and in FIG. 19, the direction of the force $\Delta F$ is downward.

Therefore, the magnitude of the component $F_y$' in the first direction (y direction) of the actual engaging reaction force applied to the worm 4 from the engaging portion, in other words, the engaging reaction force taking into account the moment M, becomes larger by the force $\Delta F$ when the worm 4 rotates in a predetermined direction as illustrated in FIG. 18(b) ($F_y$' = $F_y$ + $\Delta F$), and becomes smaller by the force $\Delta F$ when the worm 4 rotates in a direction opposite to the predetermined direction as shown in FIG. 19(b) ($F_y$' = $F_y$ - $\Delta F$)

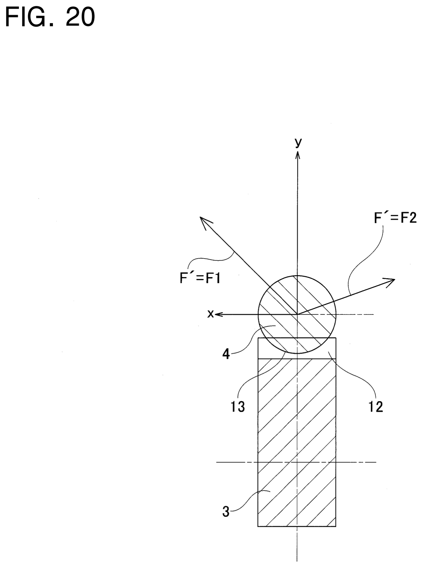

Therefore, of the actual engaging reaction force applied to the worm 4 from the engaging portion, in a case in which the worm 4 rotates in a predetermined direction, the resultant force F' of the first directional (y direction) component and the second directional (x direction) component becomes larger as illustrated in FIG. 18(b) and FIG. 20 as F' = F1, and in a case in which the worm 4 rotates in a direction opposite to the predetermined direction, the resultant force F' becomes smaller as illustrated in FIG. 19(b) and FIG. 20 as F' = F2.

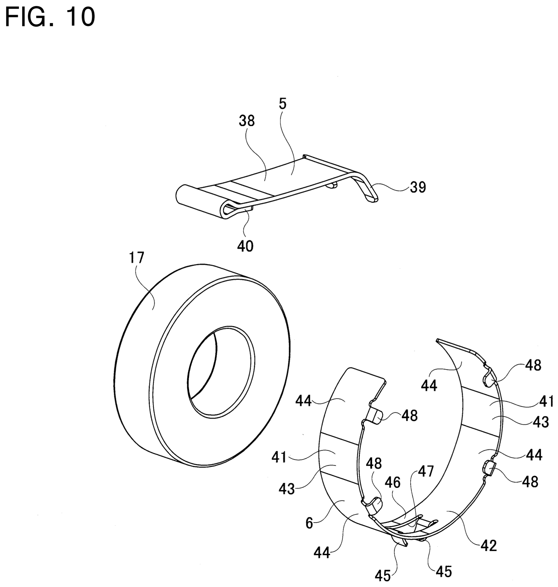

As can be seen from FIG. 20, these resultant forces F' (F1, F2), or in other words, the engaging reaction forces F1, F2 viewed from the third direction, include not only a first directional component (y-direction component) but also a second directional component (x-direction component). The direction of the first directional component is opposite to the direction of the biasing force of the first spring 5 (upward in FIGS. 5 and 10). The second directional component of the engaging reaction force F1 and the second directional component of the engaging reaction force F2 are opposite in direction to each other.

As can be seen from the above description, the first direction component of the engaging reaction force F1 is greater than the first direction component of the engaging reaction force F2, and the second direction component of the engaging reaction force F1 and the second direction component of the engaging reaction force F2 are the same magnitude. Therefore, the engaging reaction forces F1, F2 are directed in directions asymmetric with respect to each other in the second direction.

The directions of the engaging reaction forces F1, F2 as viewed from the third direction can be calculated using a calculation formula that is widely known in the field of worm reducers.

In other words, when defining

d1: Pitch circle diameter of wheel teeth 12;
d2: Pitch circle diameter of the worm teeth 13;
Tm: Torque of the electric motor 11;

$\alpha$: Pressure angle of the wheel teeth 12 and the worm teeth 13;
$\gamma$: Lead angle of the wheel teeth 12 and the worm teeth 13;
$\mu$: Coefficient of friction at the engaging portion between the wheel teeth 12 and the worm teeth 13,

the three-directional components $F_x$, $F_y$, and $F_z$ (see FIGS. 18 and 19) of the apparent engaging reaction force applied to the worm 4 from the engaging portion can be expressed by the following equations, respectively.

$$F_x = 2000 \cdot Tm/d2$$

$$F_y = (F_x \cdot \sin\alpha)/(\cos\alpha \cdot \sin\gamma + \mu \cdot \cos\gamma)$$

$$F_z = (F_y \cdot (\cos\alpha \cdot \cos\gamma - \mu \cdot \sin\gamma))/(\cos\alpha \cdot \sin\gamma + \mu \cdot \cos\gamma)$$

The first directional component F1(1) and the second directional component F1(2) of the actual engaging reaction force F1 applied to the worm 4 from the engaging portion can be expressed by the following equations, respectively.

$$F1(1) = F_y + \Delta F = F_y(d \cdot F_z/L)$$

$$F1(2) = F_x$$

Therefore, the direction of the engaging reaction force F1 as viewed from the third direction can be calculated based on the first direction component F1(1) and the second direction component F1(2).
The first direction component F2(1) and the second direction component F2(2) of the actual engaging reaction force F2 applied to the worm 4 from the engaging portion can be expressed by the following equations, respectively.

$$F2(1) = F_y - \Delta F = F_y - (d \cdot F_z/L)$$

$$F2(2) = F_x$$

Therefore, the direction of the engaging reaction force F2 as viewed from the third direction can be calculated based on the first directional component F2(1) and the second directional component F2(2).
In the worm reducer 1 incorporated in an electric power steering apparatus for an automobile, the pressure angle $\alpha$ of the wheel teeth 12 and the worm teeth 13 is not limited to this, and may be, for example, 10° to 20°. The lead angle $\gamma$ of the wheel teeth 12 and the worm teeth 13 is not limited to this, and may be, for example, 10° to 30°. The friction coefficient $\mu$ of the engaging portion between the wheel teeth 12 and the worm teeth 13 can be, for example, 0.01 to 0.15, but is not limited to this.
In the worm reducer 1 incorporated in an electric power steering apparatus for an automobile, the third direction distance D1 between an engaging center between the wheel teeth 12 and the worm teeth 13 (a virtual straight line passing through the central axis of the worm wheel 3 and extending in the first direction) and a bearing center of the ball bearing 14 can be, but is not limited to, 30 mm to 70 mm, and the third direction distance D2 between the engaging center between the wheel teeth 12 and the worm teeth 13 and the bearing center of the support bearing 17 can be 30 mm to 70 mm.
An angle $\varphi1$ between the direction of the engaging reaction force F1 and the second direction as viewed from the third direction is not limited to this, but can be 35° to 65°, and an angle $\varphi2$ between the direction of the engaging reaction force F2 and the second direction as viewed from the third direction is not limited to this, but can be 5° to 50°.
Note that in a case in which torque is input in reverse from tires to the worm wheel 3 when the tires of an automobile run over a curb or an automobile travels on a rough road, the worm 4 will rotate in response to the rotation of the worm wheel 3. In this case, when the worm 4 is rotated in the direction opposite to the predetermined direction, the engaging reaction force applied to the worm 4 becomes F1, and when the worm 4 is rotated in the predetermined direction, the engaging reaction force applied to the worm 4 becomes F2.
In the present example, the helix direction of the worm teeth 13 is right-handed; however, in a case in which the helix direction of the worm teeth 13 is left-handed, the directions of the engaging reaction forces F1, F2 in FIGS. 5 and 18 to 20 will be reversed with respect to the second direction. In this case, the structure of the portion of the present example shown in FIG. 5 can be inverted with respect to the second direction, that is, can be inverted left and right in FIG. 5.

The installation locations of the first spring 5 and the second spring 6 in the present example, as well as the structures and effects of the first spring 5 and the second spring 6 will be described in more detail below.

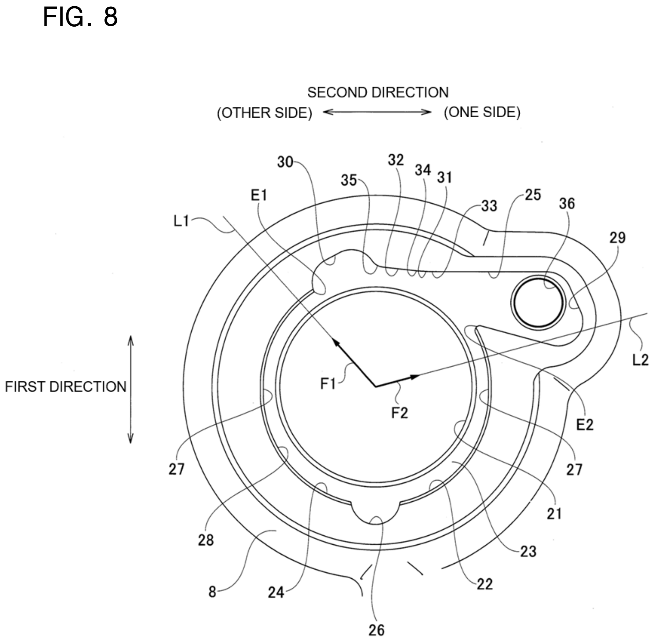

As shown in FIGS. 5 and 8, the holding portion 22 of the worm accommodating portion 8 includes a main holding portion 24, a sub-holding portion 25, and a locking portion 26. The main holding portion 24 is arranged approximately coaxially with the small-diameter cylindrical surface portion 21 and has a substantially cylindrical shape that is slightly larger than the outer circumferential surface of the support bearing 17. The sub-holding portion 25 projects toward an outer diameter side from an end portion of the main holding portion 24 on a side farther from the worm wheel 3 in the first direction (upper side in FIGS. 5 and 8). The locking portion 26 protrudes toward the outer side from an end portion of the main holding portion 24 on a side closer to the worm wheel 3 in the first direction.

The main holding portion 24 is a portion in which the support bearing 17 is arranged so as to be able to move in the radial direction. In the worm reducer 1 of the present example, the second spring 6 is arranged between the outer circumferential surface of the support bearing 17 and the inner circumferential surface of the main holding portion 24.

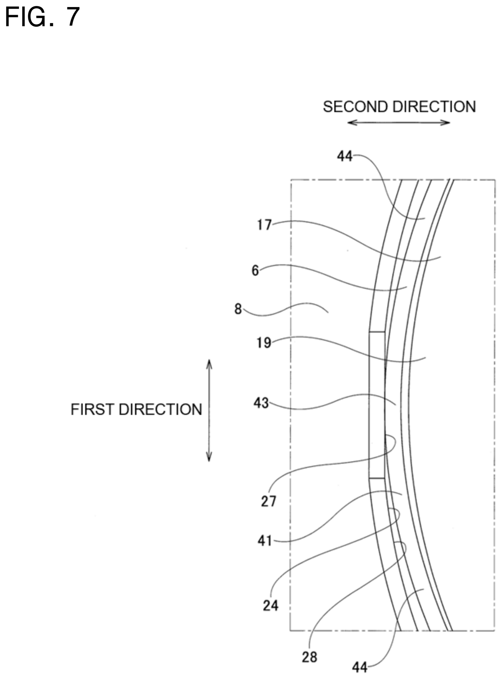

The end portions of the main holding portion 24 on both sides in the second direction are each formed by a pair of flat surface portions 27 (see FIG. 7) that extend in the first direction. The pair of flat surface portions 27 are portions that come into contact with a pair of sandwiching leaf springs 41 that constitute the second spring 6. The distance between the pair of flat surface portions 27 in the second direction is greater than the diameter of the outer circumferential surface of the support bearing 17. The length of the pair of flat surface portions 27 in the first direction is ensured to be greater than a stroke amount by which the second spring 6 can move in the first direction together with the tip end portion of the worm 4 and the support bearing 17 during operation.

Thus, the pair of sandwiching leaf springs 41 of the second spring 6 are ensured to remain in contact with the pair of flat surface portions 27 regardless of the movement of the second spring 6 in the first direction.

The portion of the main holding portion 24 that is offset in the circumferential direction from the pair of flat surface portions 27 is configured as a cylindrical surface portion 28 having a diameter larger than the outer circumferential surface of the support bearing 17. In a case of implementing the structure according to the present disclosure, the pair of flat surface portions of the main holding portion may be omitted, and the main holding portion may be configured with only the cylindrical surface portion.

As shown in FIG. 5, a range in the circumferential direction in which the cylindrical surface portion 28 of the main holding portion 24 exists includes the same positions in the circumferential direction as the vectors of the engaging reaction forces F1, F2 when viewed from the third direction. That is, radial lines L1, L2 including the vectors of the engaging reaction forces F1, F2 intersect with a portion of the cylindrical surface portion 28 of the main holding portion 24 in the circumferential direction.

The sub-holding portion 25 is a portion inside which the first spring 5 is arranged. The sub-holding portion 25 has a large recessed portion 29 recessed toward one side in the second direction at a portion on the one side in the second direction (the right side in FIGS. 5 and 8). The sub-holding portion 25 has a small recessed portion 30 recessed on a side away from the worm wheel 3 in the first direction at a portion on the other side in the second direction (the left side in FIGS. 5 and 8).

The sub-holding portion 25 has, between the large recessed portion 29 and the small recessed portion 30, a first inclined surface portion 31 and a second inclined surface portion 32 in this order from the large recessed portion 29 side. Each of the first inclined surface portion 31 and the second inclined surface portion 32 is formed by a flat surface that is inclined in a direction toward a side farther from the worm wheel 3 in the first direction while going toward the other side in the second direction.

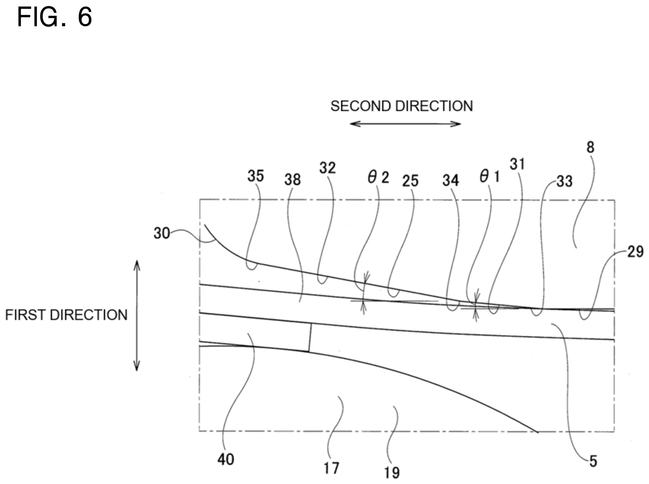

As shown in FIG. 6, an inclination angle $\theta2$ of the second inclined surface portion 32 with respect to the second direction is larger than an inclination angle $\theta1$ of the first inclined surface portion 31 with respect to the second direction ($\theta2 > \theta1$). In the present example, a length of the second inclined surface portion 32 is longer than a length of the first inclined surface portion 31 when viewed from the third direction.

The large recessed portion 29 and the first inclined surface portion 31 are connected by a first corner portion 33. The first inclined surface portion 31 and the second inclined surface portion 32 are connected by a second corner portion 34. The second inclined surface portion 32 and the small recessed portion 30 are connected by a third corner portion 35.

That is, the first corner portion 33, the second corner portion 34, and the third corner portion 35 are arranged in the order of the first corner portion 33, the second corner portion 34, and the third corner portion 35 in the direction away from a pin 37 arranged in the large recessed portion 29 in the second direction (to the left in FIGS. 5, 6, and 8), and arranged in the order of the first corner portion 33, the second corner portion 34, and the third corner portion 35 in the direction away from the worm wheel 3 in the first direction (upward in FIGS. 5, 6, and 8).

The first corner portion 33, the second corner portion 34, and the third corner portion 35, which are arranged spaced apart in the second direction, are portions that come into contact with the first spring 5 during operation.

As shown in FIGS. 5 and 8, the locking portion 26 is a portion for engaging a part of the second spring 6 in the circumferential direction. In the illustrated example, the locking portion 26 is configured as a semi-cylindrical concave surface.

In the present example, the worm accommodating portion 8 has a recessed portion 36 that opens into a portion of a stepped surface 23 that is located inside the large recessed portion 29. An end portion on the other side in the axial direction of the cylindrical pin 37 is press-fitted and supported in the recessed portion 36 so as to extend in the third direction. The pin 37 is a member used for cantilever support of the first spring 5 relative to the worm accommodating portion. The material of the pin 37 is arbitrary as long as the required rigidity of the pin 37 can be ensured. In the present example, the pin 37 is made of an iron alloy.

In the present example, the first spring 5 is made of a leaf spring, and the entire first spring 5 is arranged inside the worm accommodating portion 8. More specifically, the first spring 5 is arranged on a side farther from the worm wheel 3 in the first direction in an area between the outer circumferential surface of an inner diameter side member, which is the support bearing 17 that is externally fitted onto the tip end portion of the worm 4, and a holding portion 22 provided on the inner circumferential surface of an outer diameter side member, which is the worm accommodating portion 8.

Even more specifically, the first spring 5 is arranged inside the sub-holding portion 25 of the holding portion 22. In other words, in the present example, the first spring 5 elastically biases the support bearing 17 toward the worm wheel 3 side in order to elastically bias the tip end portion of the worm 4 toward the worm wheel 3 side.

Note that in a case of implementing the structure according to the present disclosure, an outer fitting member that is externally fitted onto the support bearing can also be used as an inner diameter side member. That is, the first spring can elastically bias the outer fitting member toward the worm wheel side.

In addition, in a case of implementing the structure according to the present disclosure, an inner fitting member that is internally fitted into the worm accommodating portion can also be used as an outer diameter side member. That is, the inner circumferential surface of the inner fitting member may be provided with the holding portion 22.

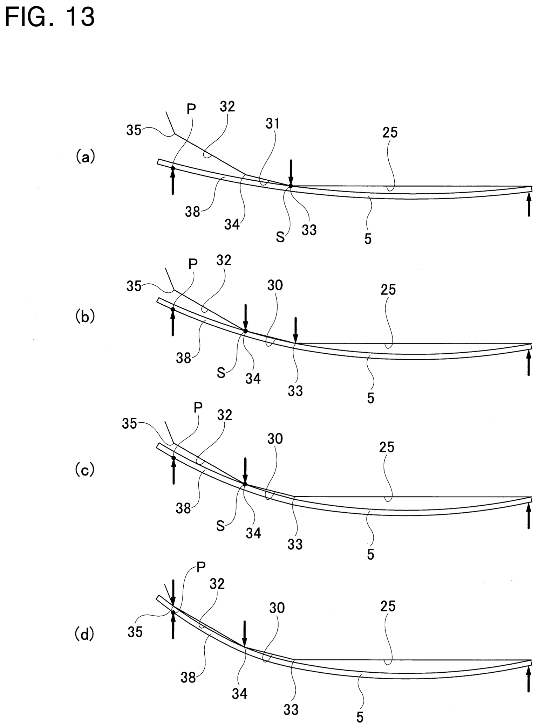

In the present example, the first spring 5 has a load point P, which is a contact portion in contact with the outer circumferential surface of the support bearing 17, and a fulcrum S, which is a portion of a contact portion in contact with the holding portion 22 that is located closest to the load point P (see FIG. 13(a)), and exhibits nonlinear spring characteristics in which the position of the fulcrum S changes to approach the load point P as the amount of deflection in the first direction increases, thereby increasing the spring constant.

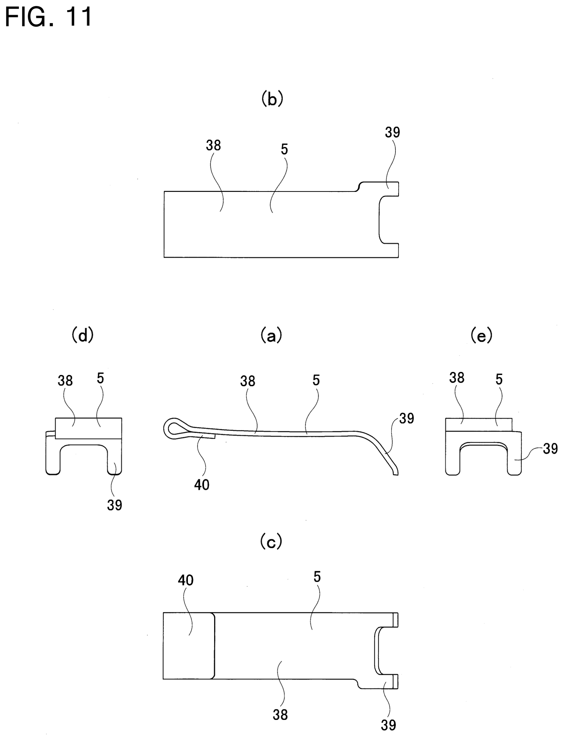

In the present example, as shown in FIGS. 11(a) to 11(e), the first spring 5 includes: a rectangular, flat band plate portion 38 with a large aspect ratio; a base plate portion 39 bent at an obtuse angle from an edge portion of the band plate portion 38 on a base end side in the longitudinal direction (right side in FIG. 11(a)) to one side in a thickness direction (bottom side in FIG. 11(a)); and a folded plate portion 40 bent 180 degrees from the edge portion of the band plate portion 38 on the tip end side in a longitudinal direction (left side in FIG. 11(a)) to one side in the thickness direction, with the tip end side portion of the folded plate portion 40 overlapping the tip end side portion of the band plate portion 38.

The material of the first spring 5 is arbitrary as long as the spring rigidity required for the first spring 5 can be ensured. In the present example, the first spring 5 is made of a metal plate such as an iron alloy.

In the present example, in a state in which the first spring 5 is arranged to extend in the second direction as shown in FIG. 5, the first spring 5 has one end portion in the second direction (in this example, the end portion on one side in the second direction) is supported by cantilever support relative to the worm accommodating portion 8, and has a load point P at the other end portion in the second direction (in this example, the end portion on the other side in the second direction) (see FIG. 13(a)). More specifically, in the present example, an end portion on the one side in the second direction of the first spring 5 is supported by cantilever support relative to the worm accommodating portion 8 using the pin 37 arranged to extend in the third direction.

More specifically, in the present example, when the worm reducer 1 is in an unloaded state, or in other words, when torque transmitted from the worm 4 to the worm wheel 3 is zero and the engaging reaction forces F1, F2 applied to the tip end portion of the worm 4 are zero, the first spring 5 is positioned relative to the surrounding parts as described below.

The base end portion of the base plate portion 39 is in elastic contact with a bottom portion of the large recessed portion 29 of the sub-holding portion 25. A side surface on the recessed side, which is one side surface in the thickness direction of a connecting portion between the band plate portion 38 and the base plate portion 39 (lower side surface in FIG. 5) in elastic contact with the outer circumferential surface of the pin 37. The other side surface in the thickness direction of an intermediate portion of the band plate portion 38 (upper side surface in FIG. 5) is in elastic contact with the first corner portion 33 of the sub-holding portion 25. One side surface in the thickness direction of the tip end portion of the folded plate portion 40 (the lower side surface in FIG. 5) is in elastic contact with an end portion of the outer circumferential surface of the support bearing 17 that is on a side far from the worm wheel 3 in the first direction.

In the present example, a folded plate portion 40 is provided at a portion of the first spring 5 that comes into contact with the outer circumferential surface of the support bearing 17. Therefore, the size of a gap in the radial direction that exists between the portion of the outer circumferential surface of the support bearing 17 that comes into contact with the first spring 5 and the holding portion 22 can be adjusted to an appropriate size based on the presence of the folded plate portion 40.

When the worm reducer 1 is in a no-load state, the band plate portion 38 is not in contact with the second corner portion 34 and the third corner portion 35, and gaps exist between the band plate portion38 and the second corner portion 34 and the third corner portion 35.

In this state, the first spring 5 elastically biases the support bearing 17 toward the worm wheel 3, with the contact portion with the first corner portion 33 serving as the fulcrum S and the contact portion with the outer circumferential surface of the support bearing 17 serving as the load point P (see FIG. 13(a)). In the present example, the first spring 5 is held at the location of use by frictional forces acting on the contact portions with the worm accommodating portion 8 and the pin 37. In addition, the load point P is located at approximately the same position as the third corner portion 35 of the sub-holding portion 25 in the second direction.

In the present example, when the engaging reaction force F1 or F2 applied to the tip end portion of the worm 4 increases, a pressing force applied from the support bearing 17 to the load point P of the first spring 5 increases, and the amount of deflection of the first spring 5 in the first direction, specifically the amount of deflection of the band plate portion 38 in the first direction, increases. FIGS. 13(a) to 13(d) are diagrams that schematically show how the amount of deflection increases.

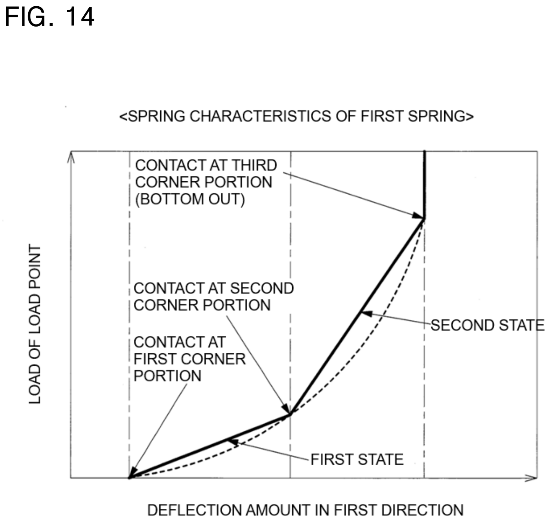

In this example, when the amount of deflection of the first spring 5 in the first direction increases, the elastic contact position of the first spring 5 with respect to the sub-holding portion 25 changes in the order shown in FIGS. 13(a) to 13(d). That is, the position of the fulcrum S of the first spring 5 changes in a stepwise manner in a direction approaching the load point P. Thus, the spring constant of the first spring 5 increases stepwise as shown in FIG. 14 (conceptual diagram).

More specifically, as the amount of deflection of the first spring 5 in the first direction increases, the elastic contact position of the first spring 5 with respect to the sub-holding portion 25 changes from the first corner portion 33 (one location) illustrated in FIG. 13(a) to the first corner portion 33 and second corner portion 34 (two locations) illustrated in FIG 13(b), then to the second corner 34 (one location) illustrated in FIG. 13(c), and then to the second corner portion 34 and third corner 35 (two locations) illustrated in Figure 13(d). That is, in the present example, the first spring 5 may come into contact with two or more of the plurality of corner portions simultaneously during operation.

As illustrated in FIG. 13(a), when the first spring 5 is in elastic contact only with the first corner portion 33 (one location), the fulcrum S of the first spring 5 becomes the contact portion with the first corner portion 33. In this state (first stage), the spring constant of the first spring 5 is relatively small, as illustrated in FIG. 14. Note that in the present example, during normal operation when no reverse torque input occurs, the amount of deflection of the first spring 5 in the first direction is kept small, and the first spring 5 is always in contact with the first corner portion 33.

As illustrated in FIG. 13(b), in a state in which the first spring 5 is in elastic contact with the first corner portion 33 and the second corner portion 34 (two locations), and in a state in which the first spring 5 is in elastic contact with only the second corner portion 34 (one location), as shown in FIG. 13(c), the fulcrum S of the first spring 5 becomes the contact portion with the second corner portion 34. The spring constant of the first spring 5 in this state (second stage) is relatively large, as shown in FIG. 14, and more specifically, is larger than that in the first stage.

As shown in FIG. 13(d), when the first spring 5 elastically comes in contact with the second corner portion 34 and the third corner portion 35 (two locations), the first spring 5 can no longer increase the amount of deflection in the first direction, and reaches a so-called bottoming out state.

In the present example, the spring constant of the first spring 5 changes in two stages according to the amount of deflection of the first spring 5 in the first direction. More specifically, the spring constant of the first spring 5 increases from a relatively small value (first stage) to a relatively large value (second stage) as the amount of deflection of the first spring 5 in the first direction increases.

Therefore, with the worm reducer 1 of the present example, even in a case in which a large torque is input in reverse to the worm reducer 1 from a part located downstream of the worm reducer 1 in the direction of power transmission when a mechanical device (in this example, an automobile) incorporating the worm reducer 1 is operating, the presence of the first spring 5 makes it possible to efficiently suppress the generation of abnormal noise.

In other words, in the present example, by applying a large torque (including torque vibration) inversely to the worm reducer 1, the spring constant of the first spring 5 can be set to a relatively large value (second stage) just before the amount of deflection of the first spring 5 in the first direction increases to the state shown in FIG. 13(d). Therefore, the force with which the first spring 5 hits the third corner portion 35 can be efficiently suppressed by the large elastic force of the first spring 5. This makes it possible to efficiently suppress the generation of striking noise due to the collision.

Furthermore, the spring constant of the first spring 5 can be set to a relatively small value (first stage) just before the deflection amount of the first spring 5 in the first direction decreases to the state shown in FIG. 13(a) with the rotational direction of the worm 4 reversing from the state shown in FIG. 13(d). Therefore, the force of the collision between the wheel teeth 12 and the worm teeth 13 caused by the reversal of the rotation direction of the worm 4 can be efficiently suppressed by reducing the biasing force of the first spring 5. This makes it possible to efficiently suppress the occurrence of teeth rattling noise between the wheel teeth 12 and the worm teeth 13.

In other words, in the present example, even in a case in which torque input in reverse to the worm reducer 1 becomes torque vibration, the repeated occurrence of striking noise due to the collision between the first spring 5 and the third corner portion 35 and the teeth rattling noise between the wheel teeth 12 and the worm teeth 13, that is, the occurrence of rattling noise, can be efficiently suppressed.

On the other hand, in the present example, during normal operation when no reverse torque input occurs, the amount of deflection of the first spring 5 in the first direction is small, and thus the spring constant of the first spring 5 can be set to a relatively small value (first stage). Therefore, during normal operation, regardless of the displacement of the worm 4 due to the generation of engaging reaction forces F1, F2, the friction force acting on the engaging portion between the wheel teeth 12 and the worm teeth 13 can be kept small, and the efficiency of torque transmission from the worm 4 to the worm wheel 3 can be sufficiently ensured.

In short, the worm reducer 1 of the present embodiment can easily suppress the generation of abnormal noise when torque is input in reverse while ensuring torque transmission efficiency during normal operation at a high level.

In the present example, the first spring 5 has two corner portions that serve as the fulcrum S, the first corner portion 33 and the second corner portion 34; however, in a case of implementing the structure according to the present disclosure, the spring constant of the first spring 5 can be changed in three or more stages by increasing the number of corner portions more than in this example. In addition, a portion of the sub-holding portion 25 with which the first spring 5 elastically comes in contact with, for example, the portion located between the first corner portion 33 and the second corner portion 34, or the portion located between the second corner portion 34 and the third corner portion 35, can also be made into a convex curved surface. By adopting such a configuration, as the amount of deflection of the first spring 5 in the first direction increases, the first spring 5 curves along the convex curved surface. Therefore, the position of the fulcrum S of the first spring 5 can be continuously changed in a direction approaching the load point P, and the spring constant of the first spring 5 can be continuously increased.

In a case of implementing the worm reducer according to the present disclosure, the spring characteristics of the first spring do not need to be nonlinear, but may be linear. In a case of implementing the worm reducer according to the present disclosure and using a leaf spring as the first spring, the shape of the leaf spring can be different from that of the present example. In a case of implementing the worm reducer according to the present disclosure, various types of springs other than leaf springs, such as a coil spring, can also be used as the first spring.

The second spring 6 includes a pair of sandwiching leaf springs 41 arranged on both sides of the support bearing 17 in the second direction in a portion between the outer circumferential surface of the inner diameter side member, which is the support bearing 17 that is externally fitted onto the tip end portion of the worm 4, and the holding portion 22 provided on the inner circumferential surface of the outer diameter side member, which is the worm accommodating portion 8. Each of the sandwiching leaf springs 41 exhibits a nonlinear spring characteristic in which the spring constant increases as the amount of deflection in the second direction increases.

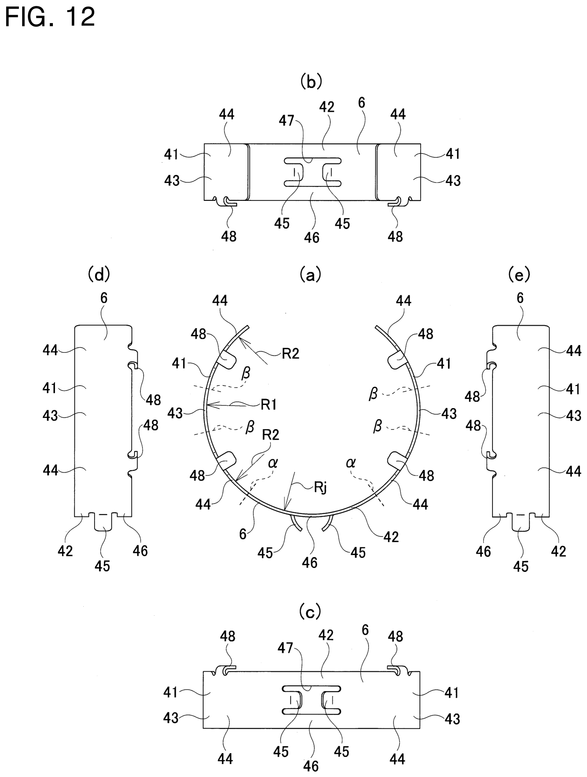

In the present example, the second spring 6 is made of a metal leaf spring having an overall notched cylindrical shape (C-shape) as shown in FIGS. 12(a) to 12(e). The pair of sandwiching leaf springs 41 constitute both side portions in the circumferential direction of the second spring 6. The second spring 6 has a circumferential connecting portion 42 that connects the end portions in the circumferential direction of the pair of sandwiching leaf springs 41 that are closer to the worm wheel 3 to each other in the circumferential direction. In FIG. 12(a), a dashed line α indicates a boundary between the pair of sandwiching leaf springs 41 and the circumferential connecting portion 42.

In the present example, each of the sandwiching leaf springs 41 has a first portion 43 that constitutes an intermediate portion in the circumferential direction and second portions 44 that constitute both side portions in the circumferential direction. In FIG. 12(a), dashed lines β indicate boundaries between the first portion 43 and the second portions 44.

The first portion 43 has a partially cylindrical shape that is curved along the outer circumferential surface of the support bearing 17. Each second portion 44 has a partially cylindrical shape curved along the outer circumferential surface of the support bearing 17 and is smoothly continuous with the first portion 43. That is, when viewed from the axial direction of the worm 4, the first portion 43 and the second portion 44 are connected so that the end portions in the circumferential direction of their inner side surfaces in the radial direction have a common tangent, and also so that the end portions in the circumferential direction of their outer side surfaces in the radial direction have a common tangent.

The radius of curvature R1 of the inner side surface in the radial direction of the first portion 43 in a free state is smaller than the radius of curvature Rs (see FIG. 5) of the outer circumferential surface of the support bearing 17 (R1 < Rs). The radius of curvature R2 of the inner side surface in the radial direction of the second portion 44 in the free state is greater than the radius of curvature R1 of the inner side surface in the radial direction of the first portion 43 in the free state (R2 > R1). In the present example, the radius of curvature R2 is set equal to the radius of curvature Rs of the outer circumferential surface of the support bearing 17 (R2 = Rs). However, in a case of implementing the structure according to the present disclosure, the radius of curvature R2 can be slightly larger or smaller than the radius of curvature Rs.

In the present example, each of the sandwiching leaf springs 41 has a residual stress that is applied to the first portion 43 that is a portion that comes into contact with the holding portion 22 provided on the inner circumferential surface of the worm accommodating portion 8. This makes it easier to ensure the durability of the first portion 43, which is more likely to undergo elastic deformation during operation than other portions. In a case of implementing the structure according to the present disclosure, the application of the residual stress may be omitted.

The circumferential connecting portion 42 has a partially cylindrical shape curved along the outer circumferential surface of the support bearing 17 and is smoothly continuous with each of the sandwiching leaf springs 41 that make up the pair of sandwiching leaf springs 41. That is, when viewed from the axial direction of the worm 4, the sandwiching leaf spring 41 and the circumferential connecting portion 42 are connected so that the end portions in the circumferential direction of their respective inner side surfaces in the radial direction have a common tangent, and so that the end portions in the circumferential direction of their respective outer side surfaces in the radial direction have a common tangent.

In the present example, the radius of curvature Rj of the inner side surface in the radial direction of the circumferential connecting portion 42 in the free state is set equal to the radius of curvature R2 of the inner side surface in the radial direction of the second portion 44 in the free state (Rj = R2). Note that in a case of implementing the structure according to the present disclosure, the circumferential connection portion may be omitted. That is, the second spring may be configured by a pair of sandwiching leaf springs that are separated from each other.

In the present example, the second spring 6 has a circumferential positioning piece 45 that engages with the worm accommodating portion 8 in the circumferential direction.

In the present example, two circumferential positioning pieces 45 are provided at an intermediate portion in the circumferential direction of the circumferential connecting portion 42, spaced apart from each other in the circumferential direction. The two circumferential positioning pieces 45 are provided so as to protrude outward in the radial direction from the intermediate portion in the circumferential direction of the circumferential connecting portion 42. More specifically, the two circumferential positioning pieces 45 are formed by bending a pair of tongue pieces outward in the radial direction, the tongue pieces being provided by forming an H-shaped through hole in the intermediate portion in the circumferential direction of the circumferential connecting portion 42.

The circumferential positioning piece 45 is a portion for positioning the second spring 6 in the circumferential direction and preventing rotation by engaging with the locking portion 26 of the holding portion 22 in the circumferential direction.

Note that in a case of implementing the structure of the present disclosure and providing circumferential positioning pieces, the shape, number, and circumferential positions of the circumferential positioning pieces may be different from those in the present example. In addition, the circumferential positioning pieces may also be provided so as to engage in the circumferential direction with an inner diameter side member configured by a support bearing or an outer fitting member that is externally fitted onto the support bearing.

In the present example, the circumferential connecting portion 42 has a low-rigidity portion 46 at an intermediate portion in the circumferential direction, and more specifically, at a portion between the two circumferential positioning pieces 45, the low-rigidity portion 46 having lower rigidity than both side portions in the circumferential direction of the circumferential connecting portion 42, which is the remaining circumferential portion, and the pair of sandwiching leaf springs 41. In the present example, in order to reduce the rigidity of the low-rigidity portion 46, a rectangular through hole 47 is formed in a portion in the circumferential direction where the low-rigidity portion 46 is located, thereby reducing the section modulus of that portion in the circumferential direction. The low rigidity portion 46 is provided in order to reduce interaction between the pair of sandwiching leaf springs 41 by lowering the flexural resistance of the low rigidity portion 46.

Note that in a case of implementing the structure according to the present disclosure and providing a low-rigidity portion at the circumferential connecting portion, the low-rigidity portion can be provided at a circumferential location different from that in the present example, or can be provided at a plurality of locations spaced apart in the circumferential direction, or the low-rigidity portion can be provided over the entire circumferential length. In a case of implementing the structure according to the present disclosure, it is also possible to omit providing a low-rigidity portion at the circumferential connection portion.

Note that in a case of implementing the structure according to the present disclosure, means for reducing the rigidity of the low-rigidity portion may be different from that of the present example, such as reducing the plate thickness of the low-rigidity portion.

In the present example, the second spring 6 has an axial positioning piece 48 that engages with the support bearing 17 in the axial direction.

In the present example, two axial positioning pieces 48 are provided on each sandwiching leaf spring 41 of the pair of sandwiching leaf springs 41, and are spaced apart in the circumferential direction. More specifically, the axial positioning pieces 48 are provided so as to bend inward in the radial direction from an end portion on the one side in the axial direction of an intermediate portion in the circumferential direction of each of the second portions 44.

Note that in a case of implementing the structure according to the present disclosure and providing axial positioning pieces, the shape, number, circumferential position, axial position, and the like of the axial positioning pieces can be different from the present example. In addition, the axial positioning pieces may also be provided so as to engage in the axial direction with an inner diameter side member configured by the worm accommodating portion or an internal fitting member that is internally fitted into the worm accommodating portion.

As shown in FIG. 5, the second spring 6 is externally fitted onto the support bearing 17 and is arranged on an inner side of the main holding portion 24 of the holding portion 22.

In this state, the two circumferential positioning pieces 45 provided on the second spring 6 are arranged on an inner side of the locking portions 26 of the holding portion 22, and are thereby engaged with the locking portions 26 in the circumferential direction. As a result, the second spring 6 is positioned in the circumferential direction, and the pair of sandwiching leaf springs 41 of the second spring 6 are arranged on both sides in the second direction in an area between the outer circumferential surface of the support bearing 17 and the main holding portion 24.

In the present example, a gap in the first direction and a gap in the second direction are provided between the two circumferential positioning pieces 45 and the locking portion 26. This allows for slight displacement of the two circumferential positioning pieces 45 relative to the locking portion 26 in the first and second directions, which is necessary during operation.

In the present example, the first direction dimensions of the two circumferential positioning pieces 45 are set so that, regardless of whether the second spring 6 moves in the first direction together with the tip end portion of the worm 4 and the support bearing 17 during operation, the amount of penetration in the first direction of the two circumferential positioning pieces 45 with respect to the locking portion 26 is always sufficient.

Each of the axial positioning pieces 48 provided on the second spring 6 abuts against a side surface on the one side in the axial direction of the outer ring 19 of the support bearing 17, thereby engaging with the outer ring 19 in the axial direction. Thus, the second spring 6 is positioned in the axial direction relative to the support bearing 17.

Furthermore, when the worm reducer 1 is in a no-load state, or in other words, when the engaging reaction forces F1, F2 are zero, each of the sandwiching leaf springs 41 of the pair of sandwiching leaf springs 41 is arranged relative to the surrounding areas as will be described below.

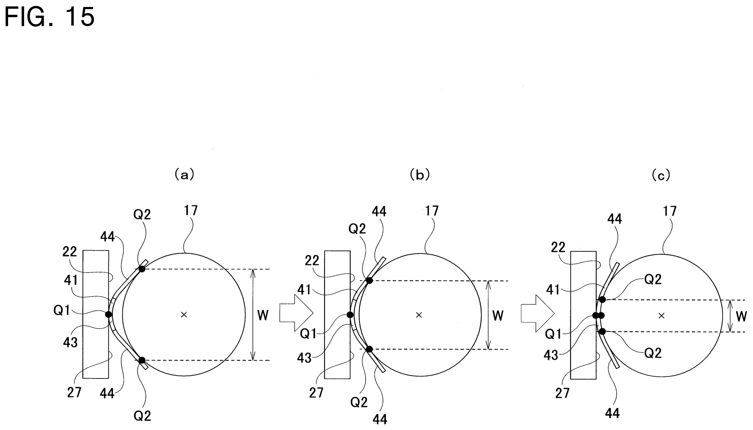

A center portion in the circumferential direction of the outer side surface in the radial direction of the first portion 43 comes in contact with the flat surface portion 27 of the main holding portion 24 at a point Q1 shown in FIG. 15(a). The end portion on the outer side in the circumferential direction of the inner side surface in the radial direction of each second portion 44, or in other words, the end portion of the inner side surface in the radial direction of each second portion 44 that is on the far side in the circumferential direction from the first portion 43, comes in contact with the outer circumferential surface of the support bearing 17 at point Q2 shown in FIG. 15(a).

The inner side surface in the radial direction of the first portion 43 does not come in contact with the outer circumferential surface of the support bearing 17, and a gap exists between the inner side surface in the radial direction of the first portion 43 and the outer circumferential surface of the support bearing 17. The outer side surface in the radial direction of each of the second portions 44 is not in contact with the main holding portion 24, and a gap exists between the outer side surface in the radial direction of each of the second portions 44 and the main holding portion 24.

That is, the sandwiching leaf spring 41 comes in contact with the main holding portion 24 at only one point (point Q1 shown in FIG. 15(a)), and comes in contact with the outer circumferential surface of the support bearing 17 at only two points (points Q2 shown in FIG. 15(a)).

When the worm reducer 1 is in a no-load state, an initial deflection in the second direction occurs in each of the sandwiching leaf springs 41. This prevents the support bearing 17 from rattling in the second direction on the inner side of the main holding portion 24 even in a no-load state. However, from the aspect of minimizing a frictional force of the pair of sandwiching leaf springs 41 against the flat surface portion 27 in a no-load state, it is preferable to set the initial deflection in the second direction as small as possible.

Of the pair of sandwiching leaf springs 41, the second portion 44 of the sandwiching leaf spring 41 located on the other side (left side in FIG. 5) in the second direction, which is the far side from the worm wheel 3, intersects with a radial line L1 including the vector of the engaging reaction force F1 when viewed from the third direction. Of the pair of sandwiching leaf springs 41, the second portion 44 of the sandwiching leaf spring 41 located on the one side (right side in FIG. 5) in the second direction, which is the far side from the worm wheel 3, intersects with a radial line L2 including the vector of the engaging reaction force F2 when viewed from the third direction.

In the above state, the second spring 6 elastically supports the support bearing 17 that is externally fitted onto the tip end portion of the worm 4 in the second direction by the pair of sandwiching leaf springs 41. Thus, the momentum of the tip end portion of the worm 4 is reduced when moving in the second direction, thereby suppressing the generation of abnormal noise.

That is, in the structure of the present example, in order to allow the tip end portion of the worm 4 to move toward and away from the worm wheel 3 in the first direction, the main holding portion 24 arranged around the support bearing 17 is formed to be slightly larger than the outer circumferential surface of the support bearing 17. Therefore, the tip end portion of the worm 4 can also move in the second direction.

On the other hand, the engaging reaction forces F1, F2 acting on the worm 4 include not only a first directional component but also a second directional component. The direction of the second directional component is reversed depending on the rotation direction of the worm 4. Therefore, when the tip end portion of the worm 4 is allowed to move in the second direction without resistance, the second directional components of the engaging reaction forces F1, F2 acting on the worm 4 will cause the outer circumferential surface of the support bearing 17 to collide with the main holding portion 24 with force in the second direction, making it more likely for abnormal noises such as harsh striking noise or rattling to occur.

Therefore, in the structure of the present example, in order to suppress the generation of such abnormal noise, a pair of sandwiching leaf springs 41 constituting the second spring 6 elastically support the support bearing 17 that is externally fitted onto the tip end portion of the worm 4 in the second direction. Thus, the momentum of the tip end portion of the worm 4 is reduced when moving in the second direction, thereby suppressing the generation of abnormal noise.

In the present example, when the engaging reaction force F1 or F2 applied to the tip end portion of the worm 4 increases, the pressing force in the second direction acting on the sandwiching leaf spring 41 located on the other side (left side in FIG. 5) or on the one side (right side in FIG. 5) of the support bearing 17 in the second direction increases. Thus, the amount of deflection of the sandwiching leaf spring 41 in the second direction increases. FIGS. 15(a) to 15(c) are diagrams that schematically illustrate how the amount of deflection increases.

In the present example, as the amount of deflection of the sandwiching leaf spring 41 in the second direction increases, a distance W in the first direction between the contact portions (points Q2) of the inner side surfaces in the radial direction of the two second portions 44 with the outer circumferential surface of the support bearing 17 decreases continuously in an order as illustrated in FIGS. 15(a) to 15(c). Note that as illustrated in FIG. 15(c), when the first portion 43 of the sandwiching leaf spring 41 is sandwiched between the flat surface portion 27 of the main holding portion 24 and the outer circumferential surface of the support bearing 17, the sandwiching leaf spring 41 can no longer increase the amount of deflection in the second direction, and reaches a so-called bottoming out state.

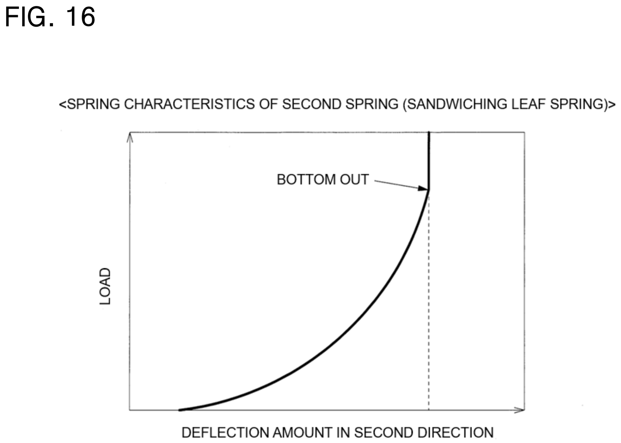

That is, in the present example, until the bottoming out state is reached, the distance W continuously decreases as the amount of deflection of the sandwiching leaf spring 41 in the second direction increases, and the spring constant of the sandwiching leaf spring 41 continuously increases as illustrated in FIG. 16 (conceptual diagram).

Therefore, in the structure of the present example, the biasing action of the first spring 5 on the tip end portion of the worm 4 and the support bearing 17 can be made smooth, and the force of collision between components in the second direction around the tip end portion of the worm 4 can be easily suppressed.

In other words, the spring constant of the sandwiching leaf spring 41 becomes small at the stage where the amount of deflection in the second direction is small (low load region), and therefore at this stage, the frictional force acting between the sandwiching leaf spring 41 and the flat surface portion 27 of the main holding portion 24, and the frictional force acting between the sandwiching leaf spring 41 and the outer circumferential surface of the support bearing 17 become small. Therefore, the tip end portion of the worm 4 and the support bearing 17 can move smoothly in the first direction. Accordingly, the biasing action of the first spring 5 on the tip end portion of the worm 4 and the support bearing 17 can be made smoother.

On the other hand, the spring constant of the sandwiching leaf spring 41 increases when the amount of deflection in the second direction increases (high load region), so the momentum of the movement of the support bearing 17 in the second direction just before reaching the bottoming out state shown in FIG. 15(c) can be efficiently suppressed by the large elastic force of the sandwiching leaf spring 41. Thus, it is possible to effectively reduce the impact sound that occurs when bottoming out.

Furthermore, the spring constant of the sandwiching leaf spring 41 can be reduced just before the deflection amount of the sandwiching leaf spring 41 in the second direction decreases to the state shown in FIG. 15(a) with the rotation direction of the worm 4 reversing from the state illustrated in FIG. 15(c). Therefore, the force of the collision between the wheel teeth 12 and the worm teeth 13 caused by the reversal of the rotation direction of the worm 4 can be efficiently suppressed by reducing the biasing force of the sandwiching leaf spring 41. This makes it possible to efficiently suppress the occurrence of teeth rattling noise between the wheel teeth 12 and the worm teeth 13.

In the present example, the radius of curvature of the inner side surfaces in the radial direction of the second portions 44 of portions on both sides in the circumferential direction of the sandwiching leaf spring 41 is set to a constant size; however, in a case of implementing the structure according to the present disclosure, the radius of curvature of the inner side surfaces in the radial direction of the second portions can also be changed in stages or continuously in the circumferential direction.

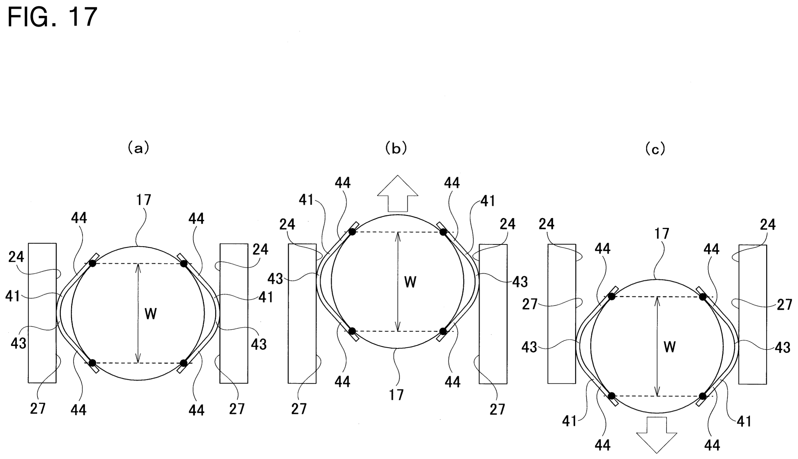

In the present example, the portions of the main holding portion 24 with which the respective sandwiching leaf springs 41 elastically come in contact are configured by flat surface portions 27 extending in the first direction. Therefore, as illustrated in FIGS. 17(a) to 17(c), even in a case in which the second spring 6 moves in the first direction, the amount of deflection in the second direction of the pair of sandwiching leaf springs 41, or in other words, the distance W, does not change, and the spring constant of each sandwiching leaf spring 41 of the pair of sandwiching leaf springs 41 can be kept constant. Therefore, stable spring characteristics can be ensured for the first spring 5 and the second spring 6.

Note that in a case of implementing the structure according to the present disclosure, the length of the pair of flat surface portions 27 in the first direction can be made smaller than the stroke amount that the second spring 6 can move in the first direction together with the tip end portion of the worm 4 and the support bearing 17 during operation, that is, when a large engaging reaction force is applied to the worm 4, the elastic contact portion of the sandwiching leaf spring 41 with the main holding portion 24 can rise up from the flat portion 27 onto the cylindrical surface portion 28. Even in this case, the spring constant of the sandwiching leaf spring 41 can be kept constant while the contact portion is present at the flat surface portion 27.

In the present example, when viewed from the third direction, the radial lines L1, L2 including the vectors of the engaging reaction forces F1, F2 intersect with a portion in the circumferential direction of the cylindrical surface portion 28 of the main holding portion 24. In addition, of the pair of sandwiching leaf springs 41, the second portion 44 of the sandwiching leaf spring 41 located on the other side (left side in FIG. 5) in the second direction, which is farther from the worm wheel 3, intersects with the radial line L1 including the vector of the engaging reaction force F1 when viewed from the third direction.

Moreover, of the pair of sandwiching leaf springs 41, the second portion 44 of the sandwiching leaf spring 41 located on one side (the right side in FIG. 5) in the second direction, which is the side farther from the worm wheel 3, intersects with the radial line L2 including the vector of the engaging reaction force F2 when viewed from the third direction.

Therefore, even in a case in which the support bearing 17 tends to move in the direction of the engaging reaction force F1 during operation, the momentum of the movement can be suppressed by the elasticity of the second portion 44 of the sandwiching leaf spring 41 that is located on the other side in the second direction and is on the side far from the worm wheel 3. Furthermore, the engaging reaction force F1 can be supported by the cylindrical surface portion 28 of the main holding portion 24.

Even in a case in which the support bearing 17 tends to move in the direction of the engaging reaction force F2 during operation, the momentum of the movement can be suppressed by the elasticity of the second portion 44 of the sandwiching leaf spring 41 located on one side in the second direction, which is on the side far from the worm wheel 3. Furthermore, the engaging reaction force F2 can be supported by the cylindrical surface portion 28 of the main holding portion 24.

In the present example, as illustrated in FIG. 5, the cylindrical surface portion 28 of the main holding portion 24 is located within a circumferential range where it can intersect with the radial lines L1, L2 including the vectors of the engaging reaction forces F1, F2 when viewed from the third direction; however, the inclination angle $\varphi 2$ of the radial line L2 with respect to the second direction is smaller than the inclination angle $\varphi 1$ of the radial line L1 with respect to the second direction. Therefore, a circumferential edge portion E2 of the cylindrical surface portion 28 on the radial line L2 side (right side in FIG. 5) in the second direction can be positioned closer to the worm wheel 3 in the first direction (lower side in FIG. 5) than the circumferential edge portion E1 on the radial line L1 side (left side in FIG. 5).

For this reason, the large recessed portion 29 of the sub-holding portion 25, which extends to the outer diameter side from the end portion of the main holding portion 24 on the far side from the worm wheel 3 in the first direction (the upper side in FIGS. 5 and 8), where one end portion of the first spring 5 and the pin 37 are located, is arranged on the same side as the radial line L2 (the right side in FIG. 5) from the central axis of the worm 4 in the second direction. Thus, the large recessed portion 29 can be arranged at a position closer to the worm wheel 3 in the first direction than in a case in which the large recessed portion 29 is arranged on the same side as the radial line L1 in the second direction (the left side in FIG. 5).

That is, by adopting such an arrangement, a width dimension in the first direction of the entire holding portion 22 including the main holding portion 24 and the sub-holding portion 25 can be minimized.

In a case of implementing the worm reducer according to the present disclosure, the spring characteristics of the second spring do not have to be nonlinear, but may be linear. In a case of implementing the worm reducer according to the present disclosure and using a leaf spring as the second spring, the shape of the leaf spring can be different from that of the present example. In a case of implementing the worm reducer according to the present disclosure, various types of springs other than leaf springs, such as a coil spring, can also be used as the second spring.

In the worm reducer 1 of the present example, the first directional component included in the engaging reaction force F1 is greater than the first directional component included in the engaging reaction force F2 (see FIGS. 5, 20, and 21). Therefore, in a case in which the engaging reaction force F1 is applied to the worm 4, the amount of displacement of the tip end portion of the worm 4 in the first direction is greater than in a case in which the engaging reaction force F2 is applied to the worm 4, and the increase in the center distance between the worm 4 and the worm wheel 3 becomes large.

Therefore, in a case in which the engaging reaction force F1 is applied to the worm 4, the worm teeth 13 and the wheel teeth 12 collide with greater force when the tip end portion of the worm 4 returns to the original position, that is, when the center distance between the worm 4 and the worm wheel 3 decreases, than when the engaging reaction force F2 is applied to the worm 4.

Therefore, in the present example, when viewed from the third direction, the direction in which the engaging reaction force F1 increases and the tip end portion of the worm 4 displaces away from the worm wheel 3 (the same as the direction of the engaging reaction force F1) and the direction in which the engaging reaction force F1 decreases and the tip end portion of the worm 4 displaces back toward the side of the worm wheel 3 are approximately the same.

When viewed from the third direction, the direction in which the engaging reaction force F1 increases and the tip end portion of the worm 4 is displaced away from the worm wheel 3 is the direction of the engaging reaction force F1. When viewed from the third direction, the direction in which the engaging reaction force F1 decreases and the tip end portion of the worm 4 displaces back toward the side of the worm wheel 3 is the direction of the reaction force of a composite spring consisting of the first spring 5 and the second spring 6 in a state in which the worm 4 is moved away from the worm wheel 3 by the engaging reaction force F1.

Therefore, in other words, when viewed from the third direction, the direction of the engaging reaction force F1 and the direction of the reaction force of the composite spring consisting of the first spring 5 and the second spring 6 in a state in which the worm 4 is moved away from the worm wheel 3 by the engaging reaction force F1 are approximately the same.

More specifically, the relationship between the spring characteristics of the first spring 5 and the spring characteristics of the second spring 6 is adjusted so that, when viewed from the third direction, an angle between the direction in which the engaging reaction force F1 increases and the tip end portion of the worm 4 is displaced away from the worm wheel 3 and the direction in which the engaging reaction force F1 decreases and the tip end portion of the worm 4 displaces back toward the side of the worm wheel 3 is within a range of ±10°, preferably within a range of ±7.5°, and more preferably within a range of ±5°.

This allows the worm teeth 13 and the wheel teeth 12 to collide over a wide area when the engaging reaction force F1 decreases and the worm 4 returns to the original position, thereby suppressing the generation of impact sound.

In this example, the angle $\varphi 1$ formed between the direction of the engaging reaction force F1 as viewed from the third direction and the second direction is approximately 45°.

Therefore, in a case in which the first spring and the second spring each have a structure that exhibits linear spring characteristics, the spring constant of the first spring in the first direction and the spring constant of the second spring in the second direction can be made approximately equal. In other words, by doing this, when viewed from the third direction, in a state in which the worm 4 is separated from the worm wheel 3 by the engaging reaction force F1, the direction of the reaction force of the composite spring consisting of the first spring and the second spring can be made to approximately coincide with the direction of the engaging reaction force F1.

However, in the present example, the first spring 5 and the second spring 6 each exhibit nonlinear spring characteristics. Therefore, in this example, in a state in which the amount of deflection of the first spring 5 in the first direction and the amount of deflection of the second spring 6 in the second direction are equal, the spring constant of the first spring 5 in the first direction and the spring constant of the second spring 6 in the second direction need only be approximately equal to each other. In other words, by doing this, when viewed from the third direction, in a state in which the worm 4 is separated from the worm wheel 3 by the engaging reaction force F1, the direction of the reaction force of the composite spring consisting of the first spring 5 and the second spring 6 can be made to approximately coincide with the direction of the engaging reaction force F1.

In addition, even in a case in which the direction of the engaging reaction force F1 as viewed from the third direction is different from the above 45°, by adjusting the ratio between the spring constant of the first spring 5 in the first direction and the spring constant of the second spring 6 in the second direction using the same idea as above, it is possible to make the direction of the reaction force of the composite spring consisting of the first spring 5 and the second spring 6 in a state in which the worm 4 is separated from the worm wheel 3 by the engaging reaction force F1 as viewed from the third direction approximately coincident with the direction of the engaging reaction force F1.

In a case of implementing the worm reducer of according to the present disclosure, from the aspect of suppressing the generation of impact sound by causing the worm teeth 13 and the wheel teeth 12 to collide over a wide area when the engaging reaction force F1 decreases and the worm 4 returns to the original position, it is most preferable that the direction in which the engaging reaction force F1 decreases and the tip end portion of the worm 4 displaces back toward the side of the worm wheel 3, as viewed from the third direction, be completely aligned with the direction of the engaging reaction force F1.

In other words, when viewed from the third direction, in a state in which the worm 4 is separated from the worm wheel 3 by the engaging reaction force F1, it is most preferable that the direction of the reaction force of the composite spring consisting of the first spring 5 and the second spring 6 be completely aligned with the direction of the engaging reaction force F1.

However, in reality, due to the influence of manufacturing errors and assembly errors of parts, as well as frictional forces between the first spring 5 and the second spring 6 and a mating member, it is not easy to make the direction of the reaction force of the composite spring consisting of the first spring 5 and the second spring 6 in a state in which the worm 4 is separated from the worm wheel 3 by the engaging reaction force F1 completely coincide with the direction of the engaging reaction force F1 when viewed from the third direction.

However, taking the above-mentioned influence into consideration, as in the structure of the present example, when viewed from the third direction, in a state in which the worm 4 is separated from the worm wheel 3 by the engaging reaction force F1, the direction of the reaction force of the composite spring of the first spring 5 and the second spring 6 is set to approximately coincide with the direction of the engaging reaction force F1 calculated by the above calculation formula, specifically, when the angle between these two directions is set to be within the range of ±10°, preferably within the range of ±7.5°, and more preferably within the range of ±5°, then when the engaging reaction force F1 decreases and the worm 4 returns to the original position, the worm teeth 13 and the wheel teeth 12 will collide over a wide area, and the generation of impact sound can be sufficiently suppressed.

Note that in the conventional structure described in JP 2020-128803 A (see FIGS. 23 to 25), no consideration is given to roughly matching the direction in which the tip end portion of the worm 103 is displaced away from the worm wheel 102 due to the engaging reaction force F1 with the direction in which the tip end portion of the worm 103 is displaced back toward the worm wheel 102 side as the engaging reaction force F1 decreases.

In addition, in the conventional structure described in JP 2002-067992 A (see FIG. 26), the tip end portion of the worm 103a is restricted so as to be able to displace only in a first direction, and thus, the direction in which the worm 103a is displaced to return to the worm wheel 102 side is the first direction, which is a direction significantly deviated from the direction of the engaging reaction force F1, and therefore, the worm teeth and wheel teeth cannot collide over a wide area, making it difficult to effectively suppress the generation of impact sound. In the conventional structure described in JP 2002-067992 A, the outer circumferential surface of the bearing 110a externally fitted onto the tip end portion of the worm 103a is in contact with a pair of guide portions 115 extending in the first direction, and when the tip end portion of the worm 103a is displaced in the first direction, the outer circumferential surface of the bearing 110a rubs against each of the guide portions 115, which may make it difficult to displace smoothly in the first direction.

In the structure of the present example, the first spring 5 that biases the support bearing 17 toward the side of the worm wheel 3 in the first direction and the second spring 6 that elastically supports the support bearing 17 in the second direction are made as separate parts. Therefore, unlike in a case in which the first spring and the second spring are made as an integral part, it is possible to set the spring characteristics of the first spring 5 and the second spring 6 without them interfering with each other. This allows for greater freedom in designing the first spring 5 and the second spring 6.

(2) Electric power steering apparatus

As illustrated in FIG. 1, the electric power steering apparatus 49 of the present example includes a steering wheel 50, a steering shaft 51, a steering column 52, a pair of universal joints 53a, 53b, an intermediate shaft 54, a steering gear unit 55, the worm reducer 1 of the present example, and an electric motor 11.

The steering wheel 50 is supported and fixed to a rear end portion of the steering shaft 51. The steering shaft 51 is rotatably supported inside the steering column 52 that is supported by the vehicle body. A front end portion of the steering shaft 51 is connected to a pinion shaft 56 of a steering gear unit 55 through a rear universal joint 53a, an intermediate shaft 54, and a front universal joint 53b.

Therefore, when the driver turns the steering wheel 50, the rotation of the steering wheel 50 is transmitted to the pinion shaft 56 through the steering shaft 51, the pair of universal joints 53a, 53b, and the intermediate shaft 54. The rotation of the pinion shaft 56 is converted into linear motion of a rack shaft (not shown) of the steering gear unit 55 that engages with the pinion shaft 56. As a result, a pair of tie rods 57 are pushed and pulled, and a steering angle corresponding to the amount of rotation of the steering wheel 50 is applied to left and right steered wheels.

The electric power steering apparatus 49 in the present example is a column type in which the worm reduction gear 1 and the electric motor 11 are supported at a front end portion of the steering column 52, and is configured so that auxiliary power of the electric motor 11 is increased by the worm reducer 1 and then applied to the front end portion of the steering shaft 51, thereby reducing the force required by the driver to operate the steering wheel 50.

In a case of implementing the structure according to the present disclosure, the worm reducer 1 and the electric motor 11 can be arranged at a position where auxiliary power is applied to the pinion shaft or rack shaft of the steering gear unit.

[Second Example]

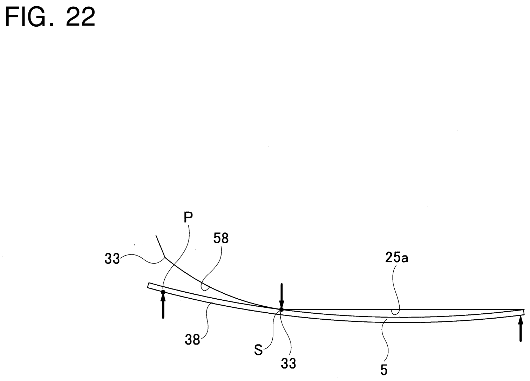

A second example of an embodiment according to the present disclosure will be described with reference to FIG. 22.

In the present example, a portion of the sub-holding portion 25a that elastically comes in contact with the first spring 5 is a convex curved surface portion 58. In the structure of the present example employing such a configuration, as the amount of deflection of the first spring 5 in the first direction increases, the first spring 5 curves along the convex curved surface portion 58. Therefore, the position of the fulcrum S of the first spring 5 can be continuously changed in a direction approaching the load point P, and the spring constant of the first spring 5 can be continuously increased, specifically, quadratically, as indicated by the broken line in FIG. 14.

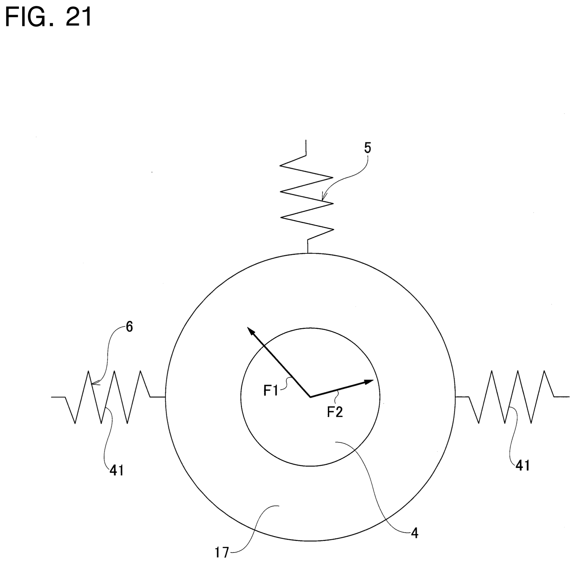

According to the structure of the present example, it is easier than in the structure of the first example to adjust the relationship between the spring characteristics of the first spring 5 and the spring characteristics of the second spring 6 so that the direction of the reaction force of the composite spring of the first spring 5 and the second spring 6 (see FIGS. 5 and 21) when viewed from the third direction, in a state in which the worm 4 is separated from the worm wheel 3 by the engaging reaction force F1, approximately coincides with the direction of the engaging reaction force F1. Other configurations and effects of the second example are similar to those of the first example.

The worm reducer according to the present disclosure can be implemented by appropriately combining the structures of the first and second examples of embodiments according to the present disclosure described above within a range that does not cause any contradiction.

REFERENCE SIGNS LIST

1 Worm reducer
2 Housing
3 Worm wheel
4 Worm
5 First spring
6 Second spring
7 Worm wheel accommodating portion
8 Worm accommodating portion
9 Retaining ring
10 Cover
11 Electric motor
12 Wheel teeth
13 Worm teeth
14 Ball bearing
15 Output shaft
16 Coupling
17 Support bearing
18 Inner ring
19 Outer ring
20 Ball
21 Small-diameter cylindrical surface portion
22 Holding portion
23 Stepped surface
24 Main holding portion
25, 25a Sub-holding portion
26 Locking portion
27 Flat surface portion
28 Cylindrical surface portion
29 Large recessed portion
30 Small recessed portion
31 First inclined surface portion
32 Second inclined surface portion
33 First corner portion
34 Second corner portion
35 Third corner portion
36 Recessed portion
37 Pin
38 Band plate portion
39 Base plate portion
40 Folded plate portion
41 Sandwiching leaf spring
42 Circumferential connecting portion
43 First portion
44 Second portion
45 Circumferential positioning piece
46 Low-rigidity portion
47 Through hole
48 Axial positioning piece
49 Electric power steering apparatus
50 Steering wheel
51 Steering shaft
52 Steering column

53a, 53b Universal joint
54 Intermediate shaft
55 Steering gear unit
56 Pinion shaft
57 Tie rod
58 Convex curved surface portion
100 Worm reducer
101 Housing
102 Worm wheel
103, 103a Worm
104 Worm wheel accommodating portion
105, 105a Worm accommodating portion
106 Wheel teeth
107 Worm teeth
108 Electric motor
109 Bearing
110, 110a Bearing
111 Holder
112, 112a First spring
113 Second spring
114 Guide member
115 Guide portion

**Claims**

1. A worm reducer, comprising:

   a housing having a worm wheel accommodating portion, and a worm accommodating portion having a central axis that is at a skewed position relative to a central axis of the worm wheel accommodating portion and an intermediate portion in an axial direction that opens into the worm wheel accommodating portion;
   a worm wheel having wheel teeth on an outer circumferential surface thereof, and rotatably supported inside the worm wheel accommodating portion;
   a worm having worm teeth on an outer circumferential surface thereof that engage with the wheel teeth, the worm having a base end portion supported inside the worm accommodating portion so as to be rotatable and pivotally displaceable relative to the worm accommodating portion, and a tip end portion supported inside the worm accommodating portion so as to be rotatable and displaceable in a radial direction relative to the worm accommodating portion;
   a first spring arranged around the tip end portion of the worm and elastically biasing the tip end portion of the worm toward a side of the worm wheel in a first direction that is perpendicular to both the axial direction of the worm wheel accommodating portion and the axial direction of the worm accommodating portion; and
   a second spring arranged around the tip end portion of the worm and elastically supporting the tip end portion of the worm in a second direction perpendicular to both the first direction and the axial direction of the worm accommodating portion;
   a component in the second direction of an engaging reaction force F1 applied to the worm from an engaging portion between the worm teeth and the wheel teeth when the worm is rotationally driven in a predetermined direction, and a component in the second direction of an engaging reaction force F2 applied to the worm from the engaging portion when the worm is rotationally driven in a direction opposite to the predetermined direction, being opposite in direction to each other, and a component in the first direction of the engaging reaction force F1 being greater than a component in the first direction of the engaging reaction force F2; and
   when viewed from a third direction that is the axial direction of the worm accommodating portion, an angle between a direction in which the engaging reaction force F1 increases and the tip end portion of the worm is displaced away from the worm wheel and a direction in which the engaging reaction force F1 decreases and the tip end portion of the worm is displaced back toward the side of the worm wheel being within a range of ±10°.

2. The worm reducer according to claim 1, wherein

   the first spring

comprises a leaf spring arranged on a side farther from the worm wheel in the first direction in a portion between an outer circumferential surface of an inner diameter side member that is a support bearing externally fitted onto the tip end portion of the worm or an outer fitting member externally fitted onto the support bearing, and an inner circumferential surface of an outer diameter side member that is the worm accommodating portion or an inner fitting member internally fitted into the worm accommodating portion;

has a load point that is a contact portion with the outer circumferential surface of the inner diameter side member, and a fulcrum that is a portion of the contact portion with the inner circumferential surface of the outer diameter side member that is located closest to the load point; and

exhibits nonlinear spring characteristics such that a spring constant thereof increases as a position of the fulcrum changes to approach the load point as an amount of deflection thereof in the first direction increases.

3. The worm reducer according to claim 2, wherein
the first spring is arranged to extend in the second direction, with one end portion thereof in the second direction being supported by cantilever support relative to the outer diameter side member, and has the load point at an other end portion thereof in the second direction.

4. The worm reducer according to claim 3, wherein
the outer diameter side member has a plurality of corner portions spaced apart in the second direction as portions that come into contact with the first spring during operation.

5. The worm reducer according to claim 3, wherein
the outer diameter side member has a convex curved surface portion that comes into contact with the first spring during operation.

6. The worm reducer according to any one of claims 1 to 5, wherein

the second spring includes a pair of sandwiching leaf springs arranged on both sides of the inner diameter side member in the second direction in a portion between an outer circumferential surface of an inner diameter side member that is a support bearing externally fitted onto the tip end portion of the worm or an outer fitting member externally fitted onto the support bearing, and an inner circumferential surface of an outer diameter side member that is the worm accommodating portion or an inner fitting member internally fitted into the worm accommodating portion; and

each of the pair of sandwiching leaf springs exhibits a nonlinear spring characteristic in which a spring constant thereof increases as an amount of deflection thereof in the second direction increases.

7. The worm reducer according to claim 6, wherein
each of the sandwiching leaf springs of the pair of sandwiching leaf springs is in contact with the inner circumferential surface of the outer diameter side member and the outer circumferential surface of the inner diameter side member, and as the amount of deflection in the second direction increases, a contact position with respect to the outer circumferential surface of the inner diameter side member changes, thereby increasing the spring constant.

FIG. 1

FIG. 2

FIG. 3

FIG. 4

# FIG. 5

SECOND DIRECTION
(OTHER SIDE) ← → (ONE SIDE)

FIRST DIRECTION

WORM WHEEL 3

FIG. 6

FIG. 7

SECOND DIRECTION

FIRST DIRECTION

44

17

6

8

19

43

27

41

24

28

44

# FIG. 8

FIG. 9

## FIG. 10

FIG. 11

(b)

38    5    39

(d)    (a)    (e)

38  5    38    5    39    38  5

40    39    39

(c)

40    5

38    39

FIG. 12

(b)

(d)　　　　　　(a)　　　　　　(e)

(c)

## FIG. 13

FIG. 14

<SPRING CHARACTERISTICS OF FIRST SPRING>

# FIG. 15

(a)　　　　　　　　　　　(b)　　　　　　　　　　　(c)

# FIG. 16

<SPRING CHARACTERISTICS OF SECOND SPRING (SANDWICHING LEAF SPRING)>

FIG. 17

# FIG. 18

(a)

(b)

# FIG. 19

(a)

(b)

# FIG. 20

# FIG. 21

# FIG. 22

FIG. 23

FIRST DIRECTION

FIG. 24

SECOND DIRECTION

FIRST DIRECTION

F1

111

F2

105

112

103

WORM WHEEL 102

## FIG. 25

SECOND DIRECTION

FIRST DIRECTION

F1  111  F2

113

105

110

103

WORM WHEEL 102

# FIG. 26

SECOND DIRECTION

FIRST DIRECTION

112a

F1

114

F2

115

115

103a

105a

110a

WORM WHEEL 102

## INTERNATIONAL SEARCH REPORT

| International application No. |
| --- |
| **PCT/JP2024/014287** |

| A. | CLASSIFICATION OF SUBJECT MATTER |
| --- | --- |

*F16H 1/16*(2006.01)i; *F16H 55/24*(2006.01)i
FI:    F16H1/16 Z; F16H55/24

According to International Patent Classification (IPC) or to both national classification and IPC

| B. | FIELDS SEARCHED |
| --- | --- |

Minimum documentation searched (classification system followed by classification symbols)

F16H1/16: F16H55/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2021-17930 A (NSK LTD.) 15 February 2021 (2021-02-15)<br>    paragraphs [0030]-[0070], fig. 1-13 | 1-5 |
| A | | 6-7 |
| Y | JP 2019-43335 A (KYB CORP.) 22 March 2019 (2019-03-22)<br>    paragraphs [0050], [0056]-[0071], fig. 1-10 | 1-5 |
| Y | JP 2016-199177 A (HITACHI AUTOMOTIVE SYSTEMS, LTD.) 01 December 2016<br>(2016-12-01)<br>    paragraphs [0025]-[0032], fig. 1-5 | 1-5 |
| Y | JP 2020-193658 A (NSK LTD.) 03 December 2020 (2020-12-03)<br>    paragraphs [0061]-[0066], fig. 15 | 2-5 |
| A | | 6-7 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 May 2024** | **11 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/014287** |

## C. DOCUMENTS CONSIDERED TO BE RELEVANT

| Category* | Citation of document, with indication, where appropriate, of the relevant passages | Relevant to claim No. |
|---|---|---|
| Y | JP 2018-204661 A (NSK LTD.) 27 December 2018 (2018-12-27) paragraphs [0040]-[0042], fig. 5 | 2-5 |
| A | | 6-7 |
| Y | JP 2004-34857 A (ARACO CORP.) 05 February 2004 (2004-02-05) paragraph [0016], fig. 8 | 2-5 |
| A | | 6-7 |
| A | JP 2017-94884 A (HITACHI AUTOMOTIVE SYSTEMS, LTD.) 01 June 2017 (2017-06-01) | 1-7 |

Form PCT/ISA/210 (second sheet) (July 2022)

EP 4 696 904 A1

**INTERNATIONAL SEARCH REPORT**
Information on patent family members

| International application No. |
|---|
| **PCT/JP2024/014287** |

| Patent document cited in search report | | | Publication date (day/month/year) | Patent family member(s) | | | Publication date (day/month/year) |
|---|---|---|---|---|---|---|---|
| JP | 2021-17930 | A | 15 February 2021 | US paragraphs [0065]-[0107], fig. 1-14<br>WO<br>EP<br>CN | 2022/0099159<br><br>2020/166261<br>3926190<br>113423960 | A1<br><br>A1<br>A1<br>A | |
| JP | 2019-43335 | A | 22 March 2019 | US paragraphs [0063], [0069]-[0084], fig. 1-10<br>WO<br>CN | 2021/0122409<br><br>2019/044281<br>111032489 | A1<br><br>A1<br>A | |
| JP | 2016-199177 | A | 01 December 2016 | (Family: none) | | | |
| JP | 2020-193658 | A | 03 December 2020 | (Family: none) | | | |
| JP | 2018-204661 | A | 27 December 2018 | (Family: none) | | | |
| JP | 2004-34857 | A | 05 February 2004 | (Family: none) | | | |
| JP | 2017-94884 | A | 01 June 2017 | WO | 2017/090327 | A1 | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020128803 A

- JP 2002067992 A